# EUROPEAN PATENT APPLICATION

(11) **EP 4 380 230 A1**
(43) Date of publication of application: **05.06.2024**
(21) Application number: 22848492.9
(22) Date of filing: 25.07.2022
(51) Int. Cl.: H04W 28/24

(54) **QOS PARAMETER CONFIGURATION METHOD, DEVICE AND APPARATUS, AND STORAGE MEDIUM**

(30) Priority: 28.07.2021 CN 202110860044
(71) Applicant: Datang Mobile Communications Equipment Co., Ltd., Beijing 100085 (CN)
(72) Inventor: ZHAO, Yali, Beijing 100085 (CN)
(74) Representative: Studio Torta S.p.A.
(86) International application number: PCT/CN2022/107667
(87) International publication number: WO 2023/005887

(57) **Abstract**

Provided in the embodiments of the present disclosure are a QoS parameter configuration method, device and apparatus, and a storage medium. The method is applied to a QoS management node, and comprises: determining a QoS parameter, which is used by a sidelink interface in a target transmission direction between a relay user equipment and a target communication peer end of a QoS management node; and sending the QoS parameter to the relay user equipment and/or the target communication peer end. By means of the QoS parameter configuration method, device and apparatus, and the storage medium that are provided in the embodiments of the present disclosure, the QoS of an end-to-end bearer/DRB in an L2 sidelink relay scenario is guaranteed.

## Description

### CROSS-REFERENCE TO RELATED APPLICATION

The present application claims priority to Chinese patent application No. 202110860044.1 filed on July 28, 2021, entitled "Qos Parameter Configuration Method, Device and Apparatus, and Storage Medium", which is hereby incorporated by reference in its entirety.

### FIELD

The present application relates to the field of radio communication, in particular to quality of service (QoS) parameter configuration methods, devices, apparatuses, and a storage medium.

### BACKGROUND

Traditional radio communication adopts cellular network, where a terminal (also known as a user equipment, UE) and a network device (such as a next generation NodeB, gNB) transmit uplink and downlink data/control information through a Uu interface. A solution to expand network coverage is to introduce a UE-to-Network relay. The UE-to-Network relay may be a terminal with relay function. For the UE-to-Network relay, the interface between the relay terminal and the network device uses the Uu interface, and the interface between the relay terminal and the relayed terminal (also known as a remote terminal or remote UE) uses a direct communication interface (also known as a sidelink interface or a proximity communication port 5 (PC5) interface). The link between the relay terminal and network device may be referred to as a backhaul link (BH) with respect to the remote terminal, and data transmission between the relay terminal and the remote terminal may be performed through a direct communication link (also known as a sidelink or a PC5).

In L2 UE-to-Network relay scenario, the bearer or data radio bearer (DRB) is end-to-end (i.e., directly established between the remote terminal and the network device), however, the lower layer (such as radio link control (RLC) layer, media access control (MAC) layer, or physical (PHY) layer) is hop by hop, which is based on each hop. For example, the link between the network device and the relay terminal is a hop, and the link between the relay terminal and the remote terminal is another hop. Due to the existence of two links between the remote terminal and the network device, namely the sidelink and the backhaul link (i.e., the Uu link between the relay terminal and the network device), how to ensure the quality of service (QoS) of the end-to-end bearer/DRB of the remote terminal and the network device in this scenario is currently an urgent problem to be addressed.

### SUMMARY

In response to problems in the related art, embodiments of the present application provide quality of service (QoS) parameter configuration methods, devices, apparatuses, and a storage medium.

An embodiment of the present application provides a quality of service (QoS) parameter configuration method, applied to a QoS management node, including:
determining a QoS parameter used by a sidelink interface in a target transmission direction between a relay terminal and a peer node of the QoS management node; and
transmitting the QoS parameter to the relay terminal and/or the peer node.

In an embodiment, for a user equipment-to-network (U2N) relay scenario, the QoS management node is a network device; and
the transmitting the QoS parameter to the relay terminal and/or the peer node includes at least one of the following:
transmitting the QoS parameter used by the sidelink interface in a downlink transmission direction to the relay terminal; and
transmitting the QoS parameter used by the sidelink interface in an uplink transmission direction to the peer node.

In an embodiment, the transmitting the QoS parameter used by the sidelink interface in the downlink transmission direction to the relay terminal includes:
transmitting the QoS parameter used by the sidelink interface in the downlink transmission direction to the relay terminal through radio resource control (RRC) signaling over a Uu interface between the network device and the relay terminal.

In an embodiment, the transmitting the QoS parameter used by the sidelink interface in the downlink transmission direction to the relay terminal through the RRC signaling over the Uu interface between the network device and the relay terminal includes at least one of the following:
in case that the QoS parameter is a first sidelink interface QoS parameter associated with a sidelink interface logical channel, carrying the first sidelink interface QoS parameter in configuration information for the sidelink interface logical channel in the downlink transmission direction, and transmitting the first sidelink interface QoS parameter to the relay terminal; and
in case that the QoS parameter is a second sidelink interface QoS parameter associated with a remote terminal and/or the relay terminal, adding an information element (IE) or a field in the RRC signaling, carrying the second sidelink interface QoS parameter in the information element or the field, and transmitting the second sidelink interface QoS parameter to the relay terminal.

In an embodiment, the transmitting the QoS parameter used by the sidelink interface in the uplink transmission direction to the peer node includes:
transmitting the QoS parameter used by the sidelink interface in the uplink transmission direction to the peer node through end-to-end RRC signaling between the network device and the peer node.

In an embodiment, the transmitting the QoS parameter used by the sidelink interface in the uplink transmission direction to the peer node through the end-to-end RRC signaling between the network device and the peer node includes at least one of the following:
in case that the QoS parameter is a first sidelink interface QoS parameter associated with a sidelink interface logical channel, carrying the first sidelink interface QoS parameter in configuration information for the sidelink interface logical channel in the uplink transmission direction and transmitting the first sidelink interface QoS parameter to the peer node; and
in case that the QoS parameter is a second sidelink interface QoS parameter associated with a remote terminal and/or the relay terminal, adding an IE or a field in the end-to-end RRC signaling, carrying the second sidelink interface QoS parameter in the IE or the field, and transmitting the second sidelink interface QoS parameter to the peer node.

In an embodiment, for a UE-to-UE relay scenario, the QoS management node is a transmitting terminal in any sidelink transmission direction; and
the transmitting the QoS parameter to the relay terminal and/or the peer node includes:
transmitting the QoS parameter used by the sidelink interface in a transmission direction from the relay terminal to the peer node to the relay terminal.

In an embodiment, the transmitting the QoS parameter used by the sidelink interface in the transmission direction from the relay terminal to the peer node to the relay terminal includes:
transmitting the QoS parameter used by the sidelink interface in the transmission direction from the relay terminal to the peer node to the relay terminal through the RRC signaling over the sidelink interface between the transmitting terminal and the relay terminal.

In an embodiment, the transmitting the QoS parameter used by the sidelink interface in the transmission direction from the relay terminal to the peer node to the relay terminal through the RRC signaling over the sidelink interface between the transmitting terminal and the relay terminal includes at least one of the following:
in case that the QoS parameter is a first sidelink interface QoS parameter associated with a sidelink interface logical channel, carrying the first sidelink interface QoS parameter in configuration information for the sidelink interface logical channel in the transmission direction from the relay terminal to the peer node, and transmitting the first sidelink interface QoS parameter to the relay terminal; and
in case that the QoS parameter is a second sidelink interface QoS parameter associated with a remote terminal and/or the relay terminal, adding an IE or a field in the RRC signaling, carrying the second sidelink interface QoS parameter in the IE or the field, and transmitting the second sidelink interface QoS parameter to the relay terminal.

In an embodiment, for a UE-to-UE relay scenario, the QoS management node is any remote terminal performing communication through UE-to-UE relay; and
the transmitting the QoS parameter to the relay terminal and/or the peer node includes at least one of the following:
transmitting the QoS parameter used by the sidelink interface in a transmission direction from the relay terminal to the peer node to the relay terminal; and
transmitting the QoS parameter used by the sidelink interface in a transmission direction from the peer node to the relay terminal to the peer node.

In an embodiment, the transmitting the QoS parameter used by the sidelink interface in the transmission direction from the relay terminal to the peer node to the relay terminal includes:
transmitting the QoS parameter used by the sidelink interface in the transmission direction from the relay terminal to the peer node to the relay terminal through RRC signaling over the sidelink interface between the remote terminal and the relay terminal.

In an embodiment, the transmitting the QoS parameter used by the sidelink interface in the transmission direction from the relay terminal to the peer node to the relay terminal through the RRC signaling over the sidelink interface between the remote terminal and the relay terminal includes at least one of the following:
in case that the QoS parameter is a first sidelink interface QoS parameter associated with a sidelink interface logical channel, carrying the first sidelink interface QoS parameter in configuration information for the sidelink interface logical channel in the transmission direction from the relay terminal to the peer node, and transmitting the first sidelink interface QoS parameter to the relay terminal; and
in case that the QoS parameter is a second sidelink interface QoS parameter associated with a remote terminal and/or the relay terminal, adding an IE or a field in the RRC signaling, carrying the second sidelink interface QoS parameter in the IE or the field, and transmitting the second sidelink interface QoS parameter to the relay terminal.

In an embodiment, the transmitting the QoS parameter used by the sidelink interface in the transmission direction from the peer node to the relay terminal to the peer node includes:
transmitting the QoS parameter used by the sidelink interface in the transmission direction from the peer node to the relay terminal to the peer node through end-to-end RRC signaling between the remote terminal and the peer node.

In an embodiment, the transmitting the QoS parameter used by the sidelink interface in the transmission direction from the peer node to the relay terminal to the peer node through the end-to-end RRC signaling between the remote terminal and the peer node includes at least one of the following:
in case that the QoS parameter is a first sidelink interface QoS parameter associated with a sidelink interface logical channel, carrying the first sidelink interface QoS parameter in configuration information for the sidelink interface logical channel in the transmission direction from the peer node to the relay terminal and transmitting the first sidelink interface QoS parameter to the peer node; and
in case that the QoS parameter is a second sidelink interface QoS parameter associated with a remote terminal and/or the relay terminal, adding an IE or a field in the end-to-end RRC signaling, carrying the second sidelink interface QoS parameter in the IE or the field, and transmitting the second sidelink interface QoS parameter to the peer node.

In an embodiment, the QoS parameter includes any one of the following or a combination thereof:
a packet delay budget;
a packet error rate; and
a PC5 link-aggregated maximum bit rate.

An embodiment of the present application further provides a quality of service (QoS) parameter configuration method, applied to a relay terminal, including:
receiving a QoS parameter, transmitted from a QoS management node, used by a sidelink interface in a transmission direction from the relay terminal to a peer node of the QoS management node.

In an embodiment, for a user equipment-to-network (U2N) relay scenario, the QoS management node is a network device; and
the receiving the QoS parameter, transmitted from the QoS management node, used by the sidelink interface in the transmission direction from the relay terminal to the peer node of the QoS management node includes:
receiving the QoS parameter, transmitted from the network device, used by the sidelink interface in the transmission direction from the relay terminal to the peer node through radio resource control (RRC) signaling over a Uu interface between the network device and the relay terminal.

In an embodiment, for a UE-to-UE relay scenario, the QoS management node is a transmitting terminal in any sidelink transmission direction or any remote terminal performing communication through UE-to-UE relay; and
the receiving the QoS parameter, transmitted from the QoS management node, used by the sidelink interface in the transmission direction from the relay terminal to the peer node of the QoS management node includes:
receiving the QoS parameter, transmitted from the QoS management node, used by the sidelink interface in the transmission direction from the relay terminal to the peer node through RRC signaling over a sidelink interface between the QoS management node and the relay terminal.

In an embodiment, the relay terminal uses a resource allocation mode of terminal autonomous resource selection over the sidelink interface.

An embodiment of the present application further provides a quality of service (QoS) parameter configuration method, applied to a peer node of a QoS management node, including:
receiving a QoS parameter, transmitted from the QoS management node, used by a sidelink interface in a transmission direction from the peer node to a relay terminal.

In an embodiment, the receiving the QoS parameter, transmitted from the QoS management node, used by the sidelink interface in the transmission direction from the peer node to the relay terminal includes:
receiving the QoS parameter, transmitted from the QoS management node, used by the sidelink interface in the transmission direction from the peer node to the relay terminal through end-to-end radio resource control (RRC) signaling between the QoS management node and the peer node.

In an embodiment, the peer node uses a resource allocation mode of terminal autonomous resource selection over the sidelink interface.

An embodiment of the present application further provides a quality of service (QoS) management node, including a memory, a transceiver and a processor, where
the memory is used for storing a computer program; the transceiver is used for receiving and transmitting data under the control of the processor; the processor is used for reading the computer program in the memory and implement the steps of the QoS parameter configuration method applied to the QoS management node as described above.

An embodiment of the present application further provides a relay terminal, including a memory, a transceiver and a processor, where
the memory is used for storing a computer program; the transceiver is used for receiving and transmitting data under the control of the processor; the processor is used for reading the computer program in the memory and implement the steps of the QoS parameter configuration method applied to the relay terminal as described above.

An embodiment of the present application further provides a peer node for a quality of service (QoS) management node, the communication counterpart including a memory, a transceiver and a processor, where
the memory is used for storing a computer program; the transceiver is used for receiving and transmitting data under the control of the processor; the processor is used for reading the computer program in the memory and implement the steps of the QoS parameter configuration method applied to the peer node of the QoS management node as described above.

An embodiment of the present application further provides a quality of service (QoS) parameter configuration apparatus, applied to a QoS management node, including:
a determining unit, used for determining a QoS parameter used by a sidelink interface in a target transmission direction between a relay terminal and a peer node of the QoS management node; and
a transmitting unit, used for transmitting the QoS parameter to the relay terminal and/or the peer node.

An embodiment of the present application further provides a quality of service (QoS) parameter configuration apparatus, applied to a relay terminal, including:
a first receiving unit, used for receiving a QoS parameter, transmitted from a QoS management node, used by a sidelink interface in a transmission direction from the relay terminal to a peer node of the QoS management node.

An embodiment of the present application further provides a quality of service (QoS) parameter configuration apparatus, applied to a peer node of a QoS management node, including:
a second receiving unit, used for receiving a QoS parameter, transmitted from the QoS management node, used by a sidelink interface in a transmission direction from the peer node to a relay terminal.

An embodiment of the present application further provides a processor readable storage medium, where the processor readable storage medium stores a computer program, the computer program is used for causing the processor to perform the steps of the QoS parameter configuration method applied to the QoS management node as described above, or, applied to the relay terminal as described above, or, applied to the peer node of the QoS management node as described above.

In the QoS parameter configuration methods, devices, apparatuses, and storage medium provided by the embodiments of the present application, the end-to-end QoS management node determines the QoS parameter used by the sidelink interface, and transmits the QoS parameter to the relay terminal and/or the peer node of the QoS management node. As such, the relay terminal and/or the peer node of the QoS management node may perform data transmission over the sidelink interface based on the QoS parameter, ensuring the QoS of end-to-end bearer/DRB in an L2 sidelink relay scenario.

### BRIEF DESCRIPTION OF THE DRAWINGS

To provide a clearer explanation for the solutions in the embodiments of the present application or the related art, a brief description is given to the accompanying drawings required in the description of the embodiments or the related art. The accompanying drawings in the following description are some embodiments of the present application. For those ordinarily skilled in the art, other accompanying drawings may be obtained based on these drawings without any creative effort.
FIG. 1 is a schematic diagram of a traditional radio communication mode in the related art;
FIG. 2 is a schematic diagram of a device-to-device direct communication mode in the related art;
FIG. 3 is a schematic diagram of a UE-to-Network relay in the related art;
FIG. 4 is a schematic diagram of a user plane protocol stack for an L2 UE-to-Network relay in the related art;
FIG. 5 is a first flowchart of a quality of service (QoS) parameter configuration method according to an embodiment of the present application;
FIG. 6 is a second flowchart of a QoS parameter configuration method according to an embodiment of the present application;
FIG. 7 is a third flowchart of a QoS parameter configuration method according to an embodiment of the present application;
FIG. 8 is a first implementation diagram of a QoS parameter configuration method according to an embodiment of the present application;
FIG. 9 is a second implementation diagram of a QoS parameter configuration method according to an embodiment of the present application;
FIG. 10 is a third implementation diagram of a QoS parameter configuration method according to an embodiment of the present application;
FIG. 11 is a schematic structural diagram of a QoS management node according to an embodiment of the present application;
FIG. 12 is a schematic structural diagram of a relay terminal according to an embodiment of the present application;
FIG. 13 is a schematic structural diagram of a peer node for a QoS management node according to an embodiment of the present application;
FIG. 14 is a first schematic structural diagram of a QoS parameter configuration apparatus according to an embodiment of the present application;
FIG. 15 is a second schematic structural diagram of a QoS parameter configuration apparatus according to an embodiment of the present application; and
FIG. 16 is a third schematic structural diagram of a QoS parameter configuration apparatus according to an embodiment of the present application.

### DETAILED DESCRIPTION

The term "and/or" in the embodiments of the present application describes an association relationship of the associated objects, indicating three types of relationships. For example, A and/or B may indicate three situations: A exists alone, A and B exist simultaneously, and B exists alone. The character `/' generally indicates that the associated objects are in an 'or' relationship.

The term "multiple" in the embodiments of the present application refers to two or more, similar to other quantifiers.

The following provides a clear and complete description for the solutions in the embodiments of the present application in conjunction with the accompanying drawings. The described embodiments are only part of the embodiments of the present application and not all of them. Based on the embodiments in the present application, all other embodiments obtained by those ordinarily skilled in the art without creative effort fall within the scope of protection of the present application.

To facilitate a clearer understanding for the embodiments of the present application, some relevant background knowledge is described as follows.

### (1) cellular network communication

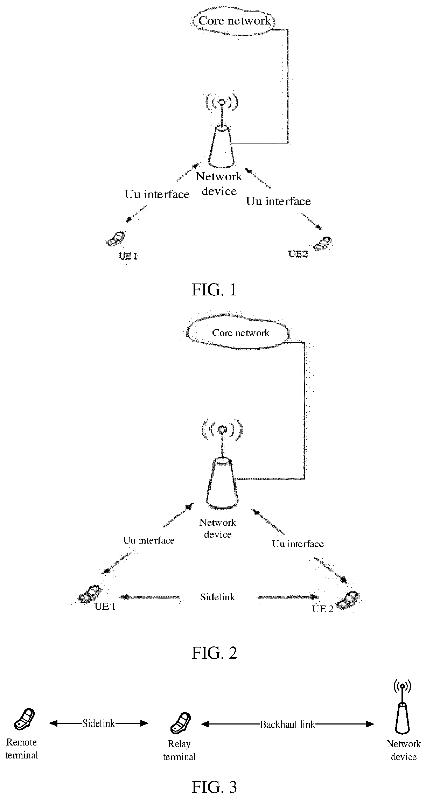

FIG. 1 is a schematic diagram of a traditional radio communication mode in the related art. As shown in FIG. 1, the traditional radio communication adopts a cellular network, that is, a terminal and a network device transmit uplink and downlink data/control information over a Uu interface.

### (2) direct communication

FIG. 2 is a schematic diagram of a device-to-device direct communication mode in the related art. As shown in FIG. 2, the direct communication refers to a mode in which adjacent terminals may transmit data over a direct communication link (also known as a sidelink or a PC5) within a short range. A radio interface corresponding to the sidelink is referred as a direct communication interface (also known as a sidelink interface or a PC5 interface).

### (3) relay

FIG. 3 is a schematic diagram of a UE-to-Network relay in the related art. As shown in FIG. 3, to expand network coverage, UE-to-Network relay may be introduced. The relay may be a terminal with relay function (also known as a sidelink relay). For the UE-to-Network relay, the interface between the relay terminal and the network device is the Uu interface, and the interface between the relay terminal and the relayed terminal (also known as a remote terminal) is a sidelink interface (also known as a direct communication interface, a bypass interface, or a PC5 interface). The link (Uu link) between the relay terminal and the network device may be referred to as a backhaul link with respect to the remote terminal.

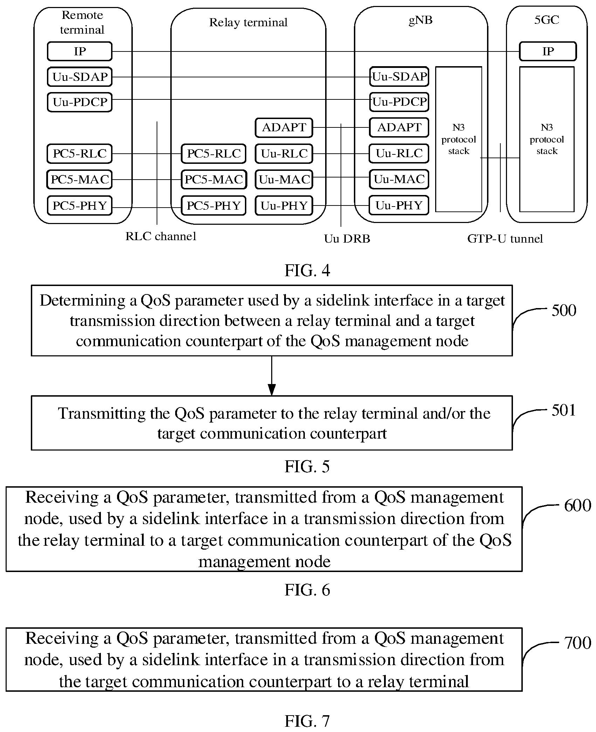

The UE-to-Network relay may include an L2 UE-to-Network relay and an L3 UE-to-Network relay based on different protocol stack architectures. FIG. 4 is a schematic diagram of a user plane protocol stack for the L2 UE-to-Network relay in the related art. As shown in FIG. 4, in the L2 UE-to-Network relay scenario, the bearer or DRB is end-to-end (i.e., directly established between a remote UE and a gNB), however, the lower layer (such as RLC, MAC, or PHY) is hop by hop.

For the L2 UE-to-Network relay scenario, two links between the remote terminal and the network device exist: a sidelink and a Uu link (also known as a backhaul link or a Uu backhaul link). In this scenario, it is an urgent problem to ensure the QoS of end-to-end bearer/DRB for the remote terminal and the network device. The same problem exists for an L2 UE-to-UE relay scenario.

In response to the above problems, embodiments of the present application provide a QoS management scheme for a relay scenario, which may ensure QoS of end-to-end bearer/DRB in an L2 sidelink relay scenario.

FIG. 5 is first flowchart of a QoS parameter configuration method according to an embodiment of the present application, which is applied to a QoS management node. As shown in FIG. 5, the method includes the following steps.

Step 500: determining a QoS parameter used by a sidelink interface in a target transmission direction between a relay terminal and a peer node of the QoS management node.

In an embodiment of the present application, the QoS management node, also known as an end-to-end QoS management node, is a network node that manages and configures the QoS parameter, and the QoS management node may be a network device (such as a base station) in a UE-to-Network relay scenario; the QoS management node may also be a transmitting terminal or any remote terminal in each of the transmission directions in a UE-to-UE relay scenario.

To ensure the QoS of end-to-end bearer/DRB in L2 sidelink relay scenario, the QoS management node needs to determine the QoS parameter used by the sidelink interface in the target transmission direction between the relay terminal and the peer node of the QoS management node. The specific determination mode may depend on the implementation of the QoS management node, and is not limited here.

The target transmission direction may refer to a transmission direction from the relay terminal to the peer node of the QoS management node, or may refer to a transmission direction from the peer node of the QoS management node to the relay terminal, or may further include each of the transmission directions between the relay terminal and the peer node of the QoS management node.

Taking the UE-to-Network relay scenario as an example, the above target transmission direction may refer to a transmission direction from the relay terminal to a remote terminal (i.e., a downlink transmission direction), or a transmission direction from the remote terminal to the relay terminal (i.e., an uplink transmission direction), or may also refer to the downlink and uplink transmission directions.

In an embodiment, the QoS parameter may include, but not limited to, any of the following or a combination thereof:
a packet delay budget (PDB);
a packet error rate (PER); and
a PC5 link-aggregated maximum bit rate, i.e., PC5 LINK-AMBR.

Step 501: transmitting the QoS parameter to the relay terminal and/or the peer node.

After the QoS management node determines the QoS parameter used by the sidelink interface in the target transmission direction between the relay terminal and the peer node of the QoS management node, the QoS management node transmits the QoS parameter to the relay terminal and/or the peer node of the QoS management node, and then the relay terminal and/or the peer node of the QoS management node may perform, based on the received QoS parameter, data transmission over the sidelink interface in the target transmission direction between the relay terminal and the peer node of the QoS management node.

Taking the UE-to-Network relay scenario as an example, if only the downlink data needs to be transmitted, after the network device determines the QoS parameter used by the sidelink interface in the downlink transmission direction between the relay terminal and the remote terminal, the network device may transmit the QoS parameter to the relay terminal, and after the relay terminal receives the QoS parameter, the relay terminal may perform downlink data transmission between the relay terminal and the remote terminal based on the QoS parameter. If only the uplink data needs to be transmitted, after the network device determines the QoS parameter used by the sidelink interface in the uplink transmission direction between the relay terminal and the remote terminal, the network device may transmit the QoS parameter to the remote terminal, and after the remote terminal receives the QoS parameter, the remote terminal may perform uplink data transmission between the remote terminal and the relay terminal based on the QoS parameter. If both the downlink and the uplink data need to be transmitted, after the network device determines the QoS parameter used by the sidelink interface in the downlink and uplink transmission direction between the relay terminal and the remote terminal, the network device may transmit the QoS parameter to the relay terminal and the remote terminal respectively.

In the QoS parameter configuration method provided by the embodiment of the present application, the end-to-end QoS management node determines the QoS parameter used by the sidelink interface and transmits the QoS parameter to the relay terminal and/or the peer node of the QoS management node. As such, the relay terminal and/or the peer node of the QoS management node may perform data transmission over the sidelink interface based on the QoS parameter, ensuring the QoS of end-to-end bearer/DRB in the L2 sidelink replay scenario.

In an embodiment, for a user equipment-to-network (U2N) relay scenario, the QoS management node is a network device; and
the transmitting the QoS parameter to the relay terminal and/or the peer node includes at least one of the following:
transmitting the QoS parameter used by the sidelink interface in the downlink transmission direction to the relay terminal; and
transmitting the QoS parameter used by the sidelink interface in the uplink transmission direction to the peer node.

For a UE-to-Network relay scenario, the QoS management node is a network device.

After the network device determines the QoS parameter used by the sidelink interface in the transmission direction (i.e., the downlink transmission direction) from the relay terminal to the peer node (i.e., the remote terminal) of the QoS management node, the network device may transmit the QoS parameter to the relay terminal. Alternatively, after the network device determines the QoS parameter used by the sidelink interface in the transmission direction (i.e., the uplink transmission direction) from the remote terminal to the relay terminal, the network device may transmit the QoS parameter to the remote terminal. Alternatively, after the network device determines the QoS parameter used by the sidelink interface in the downlink and uplink transmission direction between the relay terminal and the remote terminal, the network device may transmit the QoS parameter to the relay terminal and the remote terminal respectively.

In an embodiment, the transmitting the QoS parameter used by the sidelink interface in the downlink transmission direction to the relay terminal includes:
transmitting the QoS parameter used by the sidelink interface in the downlink transmission direction to the relay terminal through radio resource control (RRC) signaling over a Uu interface between the network device and the relay terminal.

In the UE-to-Network relay scenario, for the QoS parameter used by the sidelink interface in the downlink transmission direction, the network device may transmit the QoS parameter to the relay terminal through the RRC signaling over the Uu interface between the network device and the relay terminal.

In an embodiment, the transmitting the QoS parameter used by the sidelink interface in the downlink transmission direction to the relay terminal through the RRC signaling over the Uu interface between the network device and the relay terminal includes at least one of the following:
in case that the QoS parameter is a first sidelink interface QoS parameter associated with a sidelink interface logical channel, carrying the first sidelink interface QoS parameter in configuration information for the sidelink interface logical channel in the downlink transmission direction, and transmitting the first sidelink interface QoS parameter to the relay terminal; and
in case that the QoS parameter is a second sidelink interface QoS parameter associated with a remote terminal and/or the relay terminal, adding an information element (IE) or a field in the RRC signaling, carrying the second sidelink interface QoS parameter in the IE or the field, and transmitting the second sidelink interface QoS parameter to the relay terminal.

In the UE-to-Network relay scenario, when the network device transmits the QoS parameter used by the sidelink interface in the downlink transmission direction to the relay terminal, for different QoS parameters, the network device may transmit the QoS parameters to the relay terminal in different ways.

For the first sidelink interface QoS parameter associated with the sidelink interface logical channel, such as PDB and PER, the network device may carry the first sidelink interface QoS parameter in configuration information (such as sl-MAC LogicalChannelConfig) for the sidelink interface logical channel in the downlink transmission direction and transmit the first sidelink interface QoS parameter to the relay terminal.

For the second sidelink interface QoS parameter associated with the remote terminal and/or the relay terminal, such as PC5 LINK-AMBR, the network device may add one or more IEs or fields in the RRC signaling over the Uu interface between the network device and the relay terminal, carry the second sidelink interface QoS parameter in the IE or the field, and transmit the second sidelink interface QoS parameter to the relay terminal.

In an embodiment, the transmitting the QoS parameter used by the sidelink interface in the uplink transmission direction to the peer node includes:
transmitting the QoS parameter used by the sidelink interface in the uplink transmission direction to the peer node through end-to-end RRC signaling between the network device and the peer node.

In the UE-to-Network relay scenario, for the QoS parameter used by the sidelink interface in the uplink transmission direction, the network device may transmit the QoS parameter to the remote terminal through the end-to-end RRC signaling between the network device and the remote terminal.

In an embodiment, the transmitting the QoS parameter used by the sidelink interface in the uplink transmission direction to the peer node through the end-to-end RRC signaling between the network device and the peer node includes at least one of the following:
in case that the QoS parameter is a first sidelink interface QoS parameter associated with a sidelink interface logical channel, carrying the first sidelink interface QoS parameter in configuration information for the sidelink interface logical channel in the uplink transmission direction and transmitting the first sidelink interface QoS parameter to the peer node; and
in case that the QoS parameter is a second sidelink interface QoS parameter associated with a remote terminal and/or the relay terminal, adding an IE or a field in the end-to-end RRC signaling, carrying the second sidelink interface QoS parameter in the IE or the field, and transmitting the second sidelink interface QoS parameter to the peer node.

In the UE-to-Network relay scenario, when the network device transmits the QoS parameter used by the sidelink interface in the uplink transmission direction to the remote terminal, for different QoS parameters, the network device may transmit the QoS parameters to the remote terminal in different ways.

For the first sidelink interface QoS parameter associated with the sidelink interface logical channel, such as PDB and PER, the network device may carry the first sidelink interface QoS parameter in configuration information (such as sl-MAC-LogicalChannelConfig) for the sidelink interface logical channel in the uplink transmission direction and transmit the first sidelink interface QoS parameter to the remote terminal.

For the second sidelink interface QoS parameter associated with the remote terminal and/or the relay terminal, such as PC5 LINK-AMBR, the network device may add one or more IEs or fields in the end-to-end RRC between the network device and the remote terminal, carry the second sidelink interface QoS parameter in the IE or the field, and transmit the second sidelink interface QoS parameter to the remote terminal.

In an embodiment, for a UE-to-UE relay scenario, the QoS management node is a transmitting terminal in any sidelink transmission direction; and
the transmitting the QoS parameter to the relay terminal and/or the peer node includes:
transmitting the QoS parameter used by the sidelink interface in a transmission direction from the relay terminal to the peer node to the relay terminal.

For a UE-to-UE relay scenario, the QoS management node may be a transmitting terminal in any sidelink transmission direction.

The transmitting terminal may transmit the QoS parameter to the relay terminal after determining the QoS parameter used by the sidelink interface in the transmission direction from the relay terminal to the peer node of the transmitting terminal.

In an embodiment, the transmitting the QoS parameter used by the sidelink interface in the transmission direction from the relay terminal to the peer node to the relay terminal includes:
transmitting the QoS parameter used by the sidelink interface in the transmission direction from the relay terminal to the peer node to the relay terminal through the RRC signaling over the sidelink interface between the transmitting terminal and the relay terminal.

In the UE-to-UE relay scenario, for the QoS parameter used by the sidelink interface in the transmission direction from the relay terminal to the peer node of the transmitting terminal, the QoS management node (i.e. the transmitting terminal) may transmit the QoS parameter to the relay terminal through the RRC signaling over the sidelink interface between the transmitting terminal and the relay terminal.

In an embodiment, the transmitting the QoS parameter used by the sidelink interface in the transmission direction from the relay terminal to the peer node to the relay terminal through the RRC signaling over the sidelink interface between the transmitting terminal and the relay terminal includes at least one of the following:
in case that the QoS parameter is a first sidelink interface QoS parameter associated with a sidelink interface logical channel, carrying the first sidelink interface QoS parameter in configuration information for the sidelink interface logical channel in the transmission direction from the relay terminal to the peer node and transmitting the first sidelink interface QoS parameter to the relay terminal; and
in case that the QoS parameter is a second sidelink interface QoS parameter associated with a remote terminal and/or the relay terminal, adding an IE or a field in the RRC signaling, carrying the second sidelink interface QoS parameter in the IE or the field, and transmitting the second sidelink interface QoS parameter to the relay terminal.

In the UE-to-UE relay scenario, when the QoS management node (i.e. the transmitting terminal) transmits the QoS parameter used by the sidelink interface in the transmission direction from the relay terminal to the peer node of the transmitting terminal to the relay terminal, for different QoS parameters, the transmitting terminal may transmit the QoS parameters to the relay terminal in different ways.

For the first sidelink interface QoS parameter associated with the sidelink interface logical channel, such as PDB and PER, the transmitting terminal may carry the first sidelink interface QoS parameter in the configuration information (such as sl-MAC-LogicalChannelConfig) for the sidelink interface logical channel in the transmission direction from the relay terminal to the peer node of the transmitting terminal, and transmit the first sidelink interface QoS parameter to the relay terminal.

For the second sidelink interface QoS parameter associated with the remote terminal and/or the relay terminal, such as PC5 LINK-AMBR, the transmitting terminal may add one or more IEs or fields in the RRC signaling over the sidelink interface between the transmitting terminal and the relay terminal, and carry the second sidelink interface QoS parameter in the IE or the field, and transmit the second sidelink interface QoS parameter to the relay terminal.

In an embodiment, for a UE-to-UE relay scenario, the QoS management node is any remote terminal performing communication through UE-to-UE relay; and
the transmitting the QoS parameter to the relay terminal and/or the peer node includes at least one of the following:
transmitting the QoS parameter used by the sidelink interface in a transmission direction from the relay terminal to the peer node to the relay terminal; and
transmitting the QoS parameter used by the sidelink interface in a transmission direction from the peer node to the relay terminal to the peer node.

For the UE-to-UE relay scenario, the QoS management node may be any remote terminal that communicates through UE-to-UE Relay.

The QoS management node may transmit the QoS parameter to the relay terminal after determining the QoS parameter used by the sidelink interface in the transmission direction from the relay terminal to the peer node of the QoS management node. Alternatively, the QoS management node may transmit the QoS parameter to the peer node of the QoS management node after determining the QoS parameter used by the sidelink interface in the transmission direction from the peer node of the QoS management node to the relay terminal. Alternatively, the QoS management node may transmit the QoS parameter to the relay terminal and the peer node of the QoS management node after determining the QoS parameter used by the sidelink interface in each of the transmission directions between the relay terminal and the peer node of the QoS management.

In an embodiment, the transmitting the QoS parameter used by the sidelink interface in the transmission direction from the relay terminal to the peer node to the relay terminal includes:
transmitting the QoS parameter used by the sidelink interface in the transmission direction from the relay terminal to the peer node to the relay terminal through RRC signaling over the sidelink interface between the remote terminal and the relay terminal.

In the UE-to-UE relay scenario, for the QoS parameter used by the sidelink interface in the transmission direction from the relay terminal to the peer node of the QoS management node, the QoS management node may transmit the QoS parameter to the relay terminal through the RRC signaling over the sidelink interface between the QoS management node and the relay terminal.

In an embodiment, the transmitting the QoS parameter used by the sidelink interface in the transmission direction from the relay terminal to the peer node to the relay terminal through the RRC signaling over the sidelink interface between the remote terminal and the relay terminal includes at least one of the following:
in case that the QoS parameter is a first sidelink interface QoS parameter associated with a sidelink interface logical channel, carrying the first sidelink interface QoS parameter in configuration information for the sidelink interface logical channel in the transmission direction from the relay terminal to the peer node and transmitting the first sidelink interface QoS parameter to the relay terminal; and
in case that the QoS parameter is a second sidelink interface QoS parameter associated with a remote terminal and/or the relay terminal, adding an IE or a field in the RRC signaling, carrying the second sidelink interface QoS parameter in the IE or the field, and transmitting the second sidelink interface QoS parameter to the relay terminal.

In the UE-to-UE relay scenario, when the QoS management node transmits the QoS parameter used by the sidelink interface in the transmission direction from the relay terminal to the peer node of the QoS management node to the relay terminal, for different QoS parameters, the QoS management node may transmit the QoS parameters to the relay terminal in different ways.

For the first sidelink interface QoS parameter associated with the sidelink interface logical channel, such as PDB and PER, the QoS management node may carry the first sidelink interface QoS parameter in configuration information (such as sl-MAC-LogicalChannelConfig) for the sidelink interface logical channel in the transmission direction from the relay terminal to the peer node of the QoS management node, and transmit the first sidelink interface QoS parameter to the relay terminal.

For the second sidelink interface QoS parameter associated with the remote terminal and/or the relay terminal, such as PC5 LINK-AMBR, the QoS management node may add one or more IEs or fields in the RRC signaling over the sidelink interface between the QoS management node and the relay terminal, carry the second sidelink interface QoS parameter in the IE or the field, and transmit the second sidelink interface QoS parameter to the relay terminal.

In an embodiment, the transmitting the QoS parameter used by the sidelink interface in the transmission direction from the peer node to the relay terminal to the peer node includes:
transmitting the QoS parameter used by the sidelink interface in the transmission direction from the peer node to the relay terminal to the peer node through end-to-end RRC signaling between the remote terminal and the peer node.

In the UE-to-UE relay scenario, for the QoS parameter used by the sidelink interface in the transmission direction from the peer node of the QoS management node to the relay terminal, the QoS management node may transmit the QoS parameter to the peer node of the QoS management node through the end-to-end RRC signaling between the QoS management node and the peer node of the QoS management node.

In an embodiment, the transmitting the QoS parameter used by the sidelink interface in the transmission direction from the peer node to the relay terminal to the peer node through the end-to-end RRC signaling between the remote terminal and the peer node includes at least one of the following:
in case that the QoS parameter is a first sidelink interface QoS parameter associated with a sidelink interface logical channel, carrying the first sidelink interface QoS parameter in configuration information for the sidelink interface logical channel in the transmission direction from the peer node to the relay terminal and transmitting the first sidelink interface QoS parameter to the peer node; and
in case that the QoS parameter is a second sidelink interface QoS parameter associated with a remote terminal and/or the relay terminal, adding an IE or a field in the end-to-end RRC signaling, carrying the second sidelink interface QoS parameter in the IE or the field, and transmitting the second sidelink interface QoS parameter to the peer node.

In the UE-to-UE relay scenario, when the QoS management node transmits the QoS parameter used by the sidelink interface in the transmission direction from the peer node of the QoS management node to the relay terminal to the peer node of the QoS management node, for different QoS parameters, the QoS management node may transmit the QoS parameters to the peer node of the QoS management node in different ways.

For the first sidelink interface QoS parameter associated with the sidelink interface logical channel, such as PDB and PER, the QoS management node may carry the first sidelink interface QoS parameter in the configuration information (such as sl-MAC LogicalChannelConfig) for the sidelink interface logical channel in the transmission direction from the peer node of the QoS management node to the relay terminal, and transmit the first sidelink interface QoS parameter to the peer node of the QoS management node.

For the second sidelink interface QoS parameter associated with the remote terminal and/or the relay terminal, such as PC5 LINK-AMBR, the QoS management node may add one or more IEs or fields in the end-to-end RRC signaling between the QoS management node and the peer node of the QoS management node, carry the second sidelink interface QoS parameter in the IE or the field, and transmit the second sidelink interface QoS parameter to the peer node of the QoS management node.

FIG. 6 is a second flowchart of a quality of service (QoS) parameter configuration method according to an embodiment of the present application. The method is applied to a relay terminal. As shown in FIG. 6, the method includes the following step.

Step 600: receiving a QoS parameter, transmitted from a QoS management node, used by a sidelink interface in a transmission direction from the relay terminal to a peer node of the QoS management node.

In the embodiments of the present application, the QoS management node, also known as an end-to-end QoS management node, is a network node that manages and configures the QoS parameter, and the QoS management node may be a network device (such as a base station) in a UE-to-Network relay scenario; the QoS management node may also be a transmitting terminal or any remote terminal in each of the transmission directions in a UE-to-UE relay scenario.

To ensure the QoS of end-to-end bearer/DRB in L2 sidelink relay scenario, the QoS management node may transmit the QoS parameter to the relay terminal after determining the QoS parameter used by the sidelink interface in the transmission direction from the relay terminal to the peer node of the QoS management node. After the relay terminal receives the QoS parameter, the relay terminal may perform data transmission over the sidelink interface in the transmission direction from the relay terminal to the peer node of the QoS management node based on the QoS parameter.

In the QoS parameter configuration method provided by the embodiment of the present application, the end-to-end QoS management node transmits the QoS parameter to the relay terminal after determining the QoS parameter used by the sidelink interface in the transmission direction from the relay terminal to the peer node of the QoS management node. As such, the relay terminal may perform data transmission over the sidelink interface based on the QoS parameter, ensuring the QoS of end-to-end bearer/DRB in L2 sidelink relay scenario.

In an embodiment, for a user equipment-to-network (U2N) relay scenario, the QoS management node is a network device; and
the receiving the QoS parameter, transmitted from the QoS management node, used by the sidelink interface in the transmission direction from the relay terminal to the peer node of the QoS management node includes:
receiving the QoS parameter, transmitted from the network device, used by the sidelink interface in the transmission direction from the relay terminal to the peer node through radio resource control (RRC) signaling over a Uu interface between the network device and the relay terminal.

In the UE-to-Network relay scenario, the QoS management node may be a network device. For the QoS parameter used by the sidelink interface in the transmission direction from the relay terminal to the peer node of the QoS management node, the relay terminal may receive the QoS parameter transmitted from the network device through the RRC signaling over the Uu interface between the network device and the relay terminal.

In an embodiment, for a UE-to-UE relay scenario, the QoS management node is a transmitting terminal in any sidelink transmission direction or any remote terminal performing communication through UE-to-UE relay; and
the receiving the QoS parameter, transmitted from the QoS management node, used by the sidelink interface in the transmission direction from the relay terminal to the peer node of the QoS management node includes:
receiving the QoS parameter, transmitted from the QoS management node, used by the sidelink interface in the transmission direction from the relay terminal to the peer node through RRC signaling over a sidelink interface between the QoS management node and the relay terminal.

In the UE-to-UE relay scenario, the QoS management node may be a transmitting terminal in any sidelink transmission direction or any remote terminal that communicates through UE-to-UE Relay. For the QoS parameter used by the sidelink interface in the transmission direction from the relay terminal to the peer node of the QoS management node, the relay terminal may receive the QoS parameter transmitted from the QoS management node through the RRC signaling over the sidelink interface between the QoS management node and the relay terminal.

In an embodiment, the relay terminal may use a resource allocation mode of terminal autonomous resource selection over the sidelink interface.

In the embodiments of the present application, the relay terminal may use a resource allocation mode of terminal autonomous resource selection over the sidelink interface. As such, after the relay terminal receives the QoS parameter transmitted from the QoS management node, the relay terminal may autonomously select resources based on the QoS parameter, and the resource selection needs to meet requirements of the QoS parameter.

FIG. 7 is a third flowchart of a quality of service (QoS) parameter configuration method according to an embodiment of the present application. The method is applied to a peer node of a QoS management node. As shown in FIG. 7, the method includes the following step.

Step 700: receiving a QoS parameter, transmitted from a QoS management node, used by a sidelink interface in a transmission direction from the peer node to a relay terminal.

In the embodiments of the present application, the QoS management node, also known as an end-to-end QoS management node, is a network node that manages and configures the QoS parameter, and the QoS management node may be a network device (such as a base station) in a UE-to-Network relay scenario; the QoS management node may also be a transmitting terminal or any remote terminal in each of the transmission directions in a UE-to-UE relay scenario.

To ensure the QoS of end-to-end bearer/DRB in L2 sidelink relay scenario, the QoS management node may transmit the QoS parameter to the peer node of the QoS management node after determining the QoS parameter used by the sidelink interface in the transmission direction from the peer node of the QoS management node to the relay terminal. After the peer node of the QoS management node receives the QoS parameter, the peer node of the QoS management node may perform data transmission over the sidelink interface in the transmission direction from the peer node of the QoS management node to the relay terminal based on the QoS parameter.

In the QoS parameter configuration method provided by the embodiment of the present application, after determining the QoS parameter used by the sidelink interface in the transmission direction from the peer node of the QoS management node to the relay terminal, the end-to-end QoS management node transmits the QoS parameter to the peer node. As such, the peer node may perform data transmission over the sidelink interface based on the QoS parameter, ensuring the QoS of end-to-end bearer/DRB in the L2 sidelink relay scenario.

In an embodiment, the receiving the QoS parameter, transmitted from the QoS management node, used by the sidelink interface in the transmission direction from the peer node to the relay terminal includes:
receiving the QoS parameter, transmitted from the QoS management node, used by the sidelink interface in the transmission direction from the peer node to the relay terminal through end-to-end radio resource control (RRC) signaling between the QoS management node and the peer node.

For the QoS parameter used by the sidelink interface in the transmission direction from the peer node of the QoS management node to the relay terminal, the peer node may receive the QoS parameter transmitted from the QoS management node through the end-to-end RRC signaling between the QoS management node and the peer node.

In an embodiment, the peer node may use a resource allocation mode of terminal autonomous resource selection over the sidelink interface.

In the embodiments of the present application, the peer node of the QoS management node may use the resource allocation mode of terminal autonomous resource selection over the sidelink interface. As such, after the peer node receives the QoS parameter transmitted from the QoS management node, the peer node may autonomously select resources based on the QoS parameter, and the resource selection needs to meet requirements of the QoS parameter.

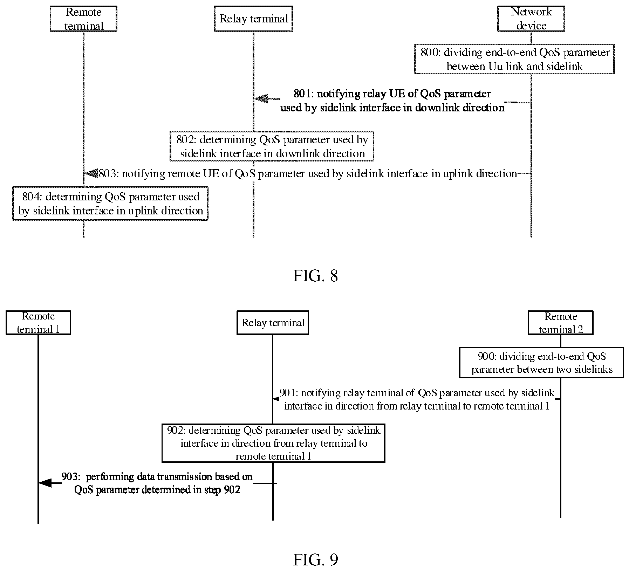

FIG. 8 is a first implementation diagram of a quality of service (QoS) parameter configuration method according to an embodiment of the present application. As shown in FIG. 8, the application scenario of the method is a U2N (UE to Network) relay scenario. In this embodiment, the end-to-end QoS management node is a network device, and the method includes the following steps.

Step 800: the network device divides an end-to-end QoS parameter between Uu link and sidelink.

The network device determines the QoS parameter used by the sidelink interface in the uplink and/or downlink directions. The QoS parameter includes but not limited to one of the following or a combination thereof:
a packet delay budget (PDB);
a packet error rate (PER); and
a PC5 link-aggregated maximum bit rate (PC5 LINK AMBR).

The specific determination mode of the QoS parameter depends on the implementation of the network device.

For downlink, the specific implementation mode may be as follows.

For downlink end-to-end PDB, the network device may divide the PDB for the end-to-end bearer/DRB between a remote UE and the network device into Uu link PDB and sidelink PDB. The sum of the Uu link PDB and sidelink PDB is equal to the PDB for the downlink end-to-end bearer/DRB between remote UE and the network device.

For downlink end-to-end PER, the network device may determine the Uu link PER and the sidelink PER based on the PER for the end-to-end bearer/DRB between the remote UE and the network device. The combination of the Uu link PER and the sidelink PER needs to ensure the PER for the downlink end-to-end bearer/DRB between the remote UE and the network device.

For downlink end-to-end PC5 LINK-AMBR, the network device may determine PC5 LINK-AMBR based on the UE-AMBR of all non guaranteed bit rate (GBR) end-to-end bearer/DRB in the downlink direction between the remote UE and the network device. For example, UE-AMBR and PC5 LINK-AMBR may be set to same value.

For uplink, the specific implementation mode may be as follows.

For uplink end-to-end PDB, the network device may divide the PDB for the end-to-end bearer/DRB between remote UE and the network device into Uu link PDB and sidelink PDB. The sum of the Uu link PDB and sidelink PDB is equal to the PDB for the uplink end-to-end bearer/DRB between remote UE and the network device.

For uplink end-to-end PER, the network device may determine the Uu link PER and the sidelink PER based on the PER for the end-to-end bearer/DRB between the remote UE and the network device. The combination of the Uu link PER and the sidelink PER needs to ensure the PER for the uplink end-to-end bearer/DRB between the remote UE and the network device.

For uplink end-to-end PC5 LINK-AMBR, the network device may determine PC5 LINK-AMBR based on the UE-AMBR of all non GBR end-to-end bearer/DRB in the uplink direction between remote UE and the network device. For example, UE-AMBR and PC5 LINK-AMBR may be set to same value.

Step 801: the network device notifies the relay UE of the QoS parameter used by the sidelink interface in the downlink direction.

In this step, the network device needs to notify the relay UE of the QoS parameter used by the sidelink interface in the downlink direction through the RRC signaling over the Uu interface between the network device and the relay UE.

For a sidelink interface QoS parameter (such as PDB and PER) associated with the sidelink interface logical channel, the QoS parameter may be carried in the configuration information (such as sl-MAC LogicalChannelConfig) for the sidelink interface logical channel in the downlink direction.

For a sidelink interface QoS parameter (such as PC5 LINK-AMBR) associated with UE, the QoS parameter may be carried by a newly added information element (IE) or field in RRC signaling.

Step 802: relay UE determines the QoS parameter used by the sidelink interface in the downlink direction.

The relay UE may determine the QoS parameter used by the sidelink interface in the downlink direction based on an instruction from the network device in step 801.

Step 803: the network device notifies the remote UE of the QoS parameter used by the sidelink interface in the uplink direction.

The network device needs to notify the remote UE of the QoS parameter used by the sidelink interface in the uplink direction through the end-to-end RRC signaling between the network device and the remote UE.

For a sidelink interface QoS parameter (such as PDB and PER) associated with the sidelink interface logical channel, the QoS parameter may be carried in the configuration information (such as sl-MAC LogicalChannelConfig) for the sidelink interface logical channel in the uplink direction.

For a sidelink interface QoS parameter (such as PC5 LINK-AMBR) associated with UE, the QoS parameter may be carried by a newly added IE or field in RRC signaling.

Step 804: the remote UE determines the QoS parameter used by the sidelink interface in the uplink direction.

The remote UE may determine the QoS parameter used by the sidelink interface in the uplink direction for the remote UE based on an instruction from the network device in step 803.

It should be noted that in this embodiment, no strict order is set between steps 801-802 and 803-804. Steps 801-802 may be performed first, followed by steps 803-804, or steps 803-804 may be performed first, followed by steps 801-802.

In this embodiment, steps 801-802 and steps 803-804 may be optional. For example, if only the data is needed to be transmitted in the uplink direction, only steps 803-804 may be performed; if only the data is needed to be transmitted in the downlink direction, only steps 801-802 may be performed.

In an embodiment, the prerequisite for performing steps 801-802 is that the relay UE uses a resource allocation mode of terminal autonomous resource selection over the sidelink interface; the prerequisite for performing steps 803-804 is that the remote UE uses a resource allocation mode of terminal autonomous resource selection over the sidelink interface.

FIG. 9 is a second implementation schematic diagram of a quality of service (QoS) parameter configuration method according to an embodiment of the present application. As shown in FIG. 9, the application scenario of the method is the U2U (UE to UE) relay scenario, where the end-to-end QoS management node is a transmitting terminal in each of the transmission directions. In this embodiment, taking remote UE 2 transmitting data to remote UE 1 as an example, the method includes the following steps.

Step 900: the remote UE 2 divides an end-to-end QoS parameter between two sidelinks.

The remote UE 2 determines the QoS parameter used by sidelink interface for two sidelinks in a direction from the remote UE 2 to the remote UE 1. The QoS parameter includes but not limited to one of the following or a combination thereof:
a packet delay budget (PDB);
a packet error rate (PER); and
a PC5 link-aggregated maximum bit rate (PC5 LINK AMBR).

The specific determination mode of the QoS parameter depends on the implementation of remote UE 2.

For the end-to-end PDB in the direction from the remote UE 2 to the remote UE 1, remote UE 2 may divide the PDB for the end-to-end bearer/DRB between remote UE 2 and remote UE 1. The sum of the two sidelink PDB is equal to the PDB for the end-to-end bearer/DRB between remote UE 2 and remote UE 1.

For the end-to-end PER in the direction from the remote UE 2 to the remote UE 1, the remote UE 2 may determine the PER for two sidelinks based on the PER for the end-to-end bearing/DRB between the remote UE 2 and the remote UE 1. The combination of the two sidelink PER needs to ensure the PER for the end-to-end bearing/DRB between the remote UE 2 and the remote UE 1.

For the end-to-end PC5 LINK-AMBR in the direction from the remote UE 2 to the remote UE 1, the remote UE 2 may use the end-to-end PC5 LINK-AMBR as the PC5 LINK-AMBR for each of the sidelinks.

Step 901: the remote UE 2 notifies the relay UE of the QoS parameter used by the sidelink interface in the direction from the relay UE to the remote UE 1.

In this step, the remote UE 2 needs to notify the relay UE of the QoS parameter used by the sidelink interface in the direction from relay UE to the remote UE 1 through the RRC signaling over the sidelink interface between the remote UE 2 and the relay UE.

For a sidelink interface QoS parameter (such as PDB and PER) associated with the sidelink interface logical channel, the QoS parameter may be carried in the configuration information (such as sl-MAC LogicalChannelConfig) for the sidelink interface logical channel in the direction from relay UE to remote UE 1.

For a sidelink interface QoS parameter (such as PC5 LINK-AMBR) associated with UE, the QoS parameter may be carried by a newly added IE or field in RRC signaling.

Step 902: the relay UE determines the QoS parameter used by the sidelink interface in the direction from the relay UE to the remote UE 1.

The relay UE may determine the QoS parameter used by the sidelink interface in the direction from the relay UE to the remote UE 1 based on an instruction from the remote UE 2 in step 901.

Step 903: the relay UE performs data transmission over sidelink interface in a direction from the relay UE to the remote UE 1 based on the QoS parameter determined in step 902.

In an embodiment, steps 902 and 903 are executed on the premise that the relay UE uses a resource allocation mode of terminal autonomous resource selection over the sidelink interface.

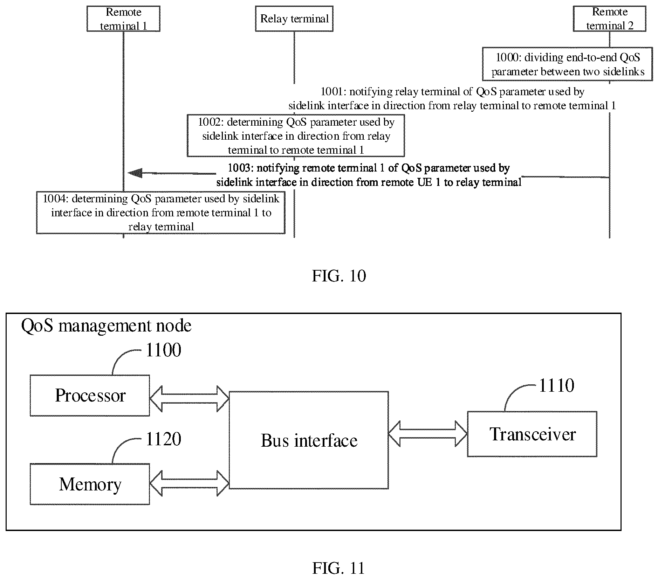

FIG. 10 is a third implementation schematic diagram of a quality of service (QoS) parameter configuration method according to an embodiment of the present application. As shown in FIG. 10, the application scenario of the method is the U2U (UE to UE) relay scenario, where the end-to-end QoS management node is any remote terminal. In this embodiment, taking remote UE 2 being used as an end-to-end QoS management node as an example, and the method includes the following steps.

Step 1000, the remote UE 2 divides an end-to-end QoS parameter between two sidelinks.

The remote UE 2 determines the QoS parameter used by sidelink interface for two sidelinks in a direction from the remote UE 2 to remote UE 1 or from the remote UE 1 to the remote UE 2. The QoS parameter includes but not limited to one of the following or a combination thereof:
a packet delay budget (PDB);
a packet error rate (PER); and
a PC5 link-aggregated maximum bit rate (PC5 LINK AMBR).

The specific determination mode of the QoS parameter depends on the implementation of the remote UE 2.

For the direction from the remote UE 2 to the remote UE 1, the specific implementation mode may be as follows.

For the end-to-end PDB in the direction from the remote UE 2 to the remote UE 1, the remote UE 2 may divide the PDB for the end-to-end bearer/DRB between the remote UE 2 and the remote UE 1. The sum of the two sidelink PDB is equal to the PDB for the end-to-end bearer/DRB between the remote UE 2 and the remote UE 1.

For the end-to-end PER in the direction from the remote UE 2 to the remote UE 1, the remote UE 2 may determine the PER for two sidelinks based on the PER for the end-to-end bearing/DRB between the remote UE 2 and the remote UE 1. The combination of the two sidelink PER needs to ensure the PER for the end-to-end bearing/DRB between the remote UE 2 and the remote UE 1.

For the end-to-end PC5 LINK-AMBR in the direction from the remote UE 2 to the remote UE 1, the remote UE 2 may use the end-to-end PC5 LINK-AMBR as the PC5 LINK-AMBR for each of the sidelinks.

For the direction from the remote UE 2 to the remote UE 1, the specific implementation mode may be as follows.

For the end-to-end PDB in the direction from the remote UE 2 to the remote UE 1, the remote UE 2 may divide the PDB for the end-to-end bearer/DRB between the remote UE 1 and the remote UE 2. The sum of the two sidelink PDB is equal to the PDB for the end-to-end bearer/DRB between the remote UE 1 and the remote UE 2.

For the end-to-end PER in the direction from the remote UE 2 to the remote UE 1, the remote UE 2 may determine the PER for two sidelinks based on the PER for the end-to-end bearing/DRB between the remote UE 1 and the remote UE 2. The combination of the two sidelink PER needs to ensure the PER for the end-to-end bearing/DRB between the remote UE 1 and the remote UE 2.

For the end-to-end PC5 LINK-AMBR in the direction from the remote UE 2 to the remote UE 1, the remote UE 2 may use the end-to-end PC5 LINK-AMBR as the PC5 LINK-AMBR for each of the sidelinks.

Step 1001: the remote UE 2 notifies the relay UE of the QoS parameter used by the sidelink interface in the direction from the relay UE to the remote UE 1.

In this step, the remote UE 2 needs to notify the relay UE of the QoS parameter used by the sidelink interface in the direction from relay UE to remote UE 1 through the RRC signaling over the sidelink interface between remote UE 2 and relay UE.

For a sidelink interface QoS parameter (such as PDB and PER) associated with the sidelink interface logical channel, the QoS parameter may be carried in the configuration information (such as sl-MAC LogicalChannelConfig) for the sidelink interface logical channel in the direction from the relay UE to the remote UE 1.

For a sidelink interface QoS parameter (such as PC5 LINK-AMBR) associated with UE, the QoS parameter may be carried by a newly added information element (IE) or field in RRC signaling.

Step 1002: the relay UE determines the QoS parameter used by the sidelink interface in the direction from the relay UE to the remote UE 1.

The relay UE may determine the QoS parameter used by the sidelink interface in the direction from the relay UE to the remote UE 1 based on an instruction from remote UE 2 in step 1001.

Step 1003: the remote UE 2 notifies remote UE 1 of the QoS parameter used by the sidelink interface in the direction from remote UE 1 to relay UE.

In this step, remote UE 2 needs to notify remote UE 1 of the QoS parameter used by the sidelink interface in the direction from remote UE 1 to relay UE through the end-to-end RRC signaling between remote UE 2 and remote UE 1.

For a sidelink interface QoS parameter (such as PDB and PER) associated with the sidelink interface logical channel, the QoS parameter may be carried in the configuration information (such as sl-MAC LogicalChannelConfig) for the sidelink interface logical channel in the direction from the remote UE 1 to the relay UE.

For a sidelink interface QoS parameter (such as PC5 LINK-AMBR) associated with UE, the QoS parameter may be carried by a newly added IE or field in RRC signaling.

Step 1004: the remote UE 1 determines the QoS parameter used by the sidelink interface in the direction from the remote UE 1 to the relay UE.

The remote UE 1 may determine the QoS parameter used by the sidelink interface in the direction from the remote UE 1 to the relay UE based on an instruction from the remote UE 2 in step 1003.

It should be noted that in this embodiment, no strict order is set between steps 1001-1002 and 1003-1004. Steps 1001-1002 may be performed first, followed by steps 1003-1004, or steps 1003-1004 may be performed first, followed by steps 1001-1002.

In this embodiment, steps 1001-1002 and 1003-1004 may be optional, for example. if only the data transmission in the direction from the remote UE 2 to the remote UE 1 is needed, only steps 1003-1004 may be performed; if only the data transmission in the direction from the remote UE 2 to the remote UE 1 is needed, only steps 1001-1002 may be performed.

In an embodiment, the prerequisite for performing steps 1001-1002 is that the relay UE uses a resource allocation mode of terminal autonomous resource selection over the sidelink interface; the prerequisite for performing steps 1003-1004 is that remote UE 1 uses a resource allocation mode of terminal autonomous resource selection over the sidelink interface.

The method and apparatus of the embodiments of the present application are based on the same concept. Due to the similar principles of problem-solving between the method and apparatus, the embodiments of the apparatus and method may be referred to each other, and any repetition is omitted.

FIG. 11 is a schematic structural diagram of a quality of service (QoS) management node according to an embodiment of the present application. As shown in FIG. 11, the QoS management node includes a memory 1120, a transceiver 1110 and a processor 1100. The processor 1100 and the memory 1120 may also be arranged physically separately.

The memory 1120 is used for storing a computer program; and the transceiver 1110 is used for receiving and transmitting data under the control of the processor 1100.

The transceiver 1110 is used for receiving and transmitting data under the control of processor 1100.

In FIG. 11, a bus architecture may include any number of interconnected buses and bridges, and the bus architecture is linked together through one or more processors represented by the processor 1100 and various circuits of memories represented by the memory 1120. The bus architecture may also link various other circuits such as peripheral devices, regulators, and power management circuits together. The bus interface provides an interface. The transceiver 1110 may be multiple elements, including a transmitter and a receiver, providing a unit for communicating with various other apparatuses on a transmission medium, the transmission medium including wireless channels, wired channels, optical cables, and other transmission media.

The processor 1100 is used for managing the bus architecture and general processing, and the memory 1120 may store data used by the processor 1100 during operations.

The processor 1100 may be a central processing unit (CPU), application specific integrated circuit (ASIC), field programmable gate array (FPGA), or complex programmable logic device (CPLD), and the processor may also adopt a multi-core architecture.

The processor 1100 is used for executing, based on the obtained executable instructions, any of the methods according to the embodiments of the present application by calling the computer program stored in the memory 1120, for example: determining a QoS parameter used by a sidelink interface in a target transmission direction between a relay terminal and a peer node of a QoS management node; and transmitting the QoS parameter to the relay terminal and/or the peer node.

In an embodiment, for a user equipment-to-network (U2N) relay scenario, the QoS management node is a network device; and the transmitting the QoS parameter to the relay terminal and/or the peer node includes at least one of the following: transmitting the QoS parameter used by the sidelink interface in the downlink transmission direction to the relay terminal; and transmitting the QoS parameter used by the sidelink interface in the uplink transmission direction to the peer node.

In an embodiment, the transmitting the QoS parameter used by the sidelink interface in the downlink transmission direction to the relay terminal includes: transmitting the QoS parameter used by the sidelink interface in the downlink transmission direction to the relay terminal through radio resource control (RRC) signaling over a Uu interface between the network device and the relay terminal.

In an embodiment, the transmitting the QoS parameter used by the sidelink interface in the downlink transmission direction to the relay terminal through the RRC signaling over the Uu interface between the network device and the relay terminal includes at least one of the following: in case that the QoS parameter is a first sidelink interface QoS parameter associated with a sidelink interface logical channel, carrying the first sidelink interface QoS parameter in configuration information for the sidelink interface logical channel in the downlink transmission direction, and transmitting the first sidelink interface QoS parameter to the relay terminal; and in case that the QoS parameter is a second sidelink interface QoS parameter associated with a remote terminal and/or the relay terminal, adding an information element (IE) or a field in the RRC signaling, carrying the second sidelink interface QoS parameter in the information element or the field, and transmitting the second sidelink interface QoS parameter to the relay terminal.

In an embodiment, the transmitting the QoS parameter used by the sidelink interface in the uplink transmission direction to the peer node includes: transmitting the QoS parameter used by the sidelink interface in the uplink transmission direction to the peer node through end-to-end RRC signaling between the network device and the peer node.

In an embodiment, the transmitting the QoS parameter used by the sidelink interface in the uplink transmission direction to the peer node through the end-to-end RRC signaling between the network device and the peer node includes at least one of the following: in case that the QoS parameter is a first sidelink interface QoS parameter associated with a sidelink interface logical channel, carrying the first sidelink interface QoS parameter in configuration information for the sidelink interface logical channel in the uplink transmission direction and transmitting the first sidelink interface QoS parameter to the peer node; and in case that the QoS parameter is a second sidelink interface QoS parameter associated with a remote terminal and/or the relay terminal, adding an IE or a field in the end-to-end RRC signaling, carrying the second sidelink interface QoS parameter in the IE or the field, and transmitting the second sidelink interface QoS parameter to the peer node.

In an embodiment, for a UE-to-UE relay scenario, the QoS management node is a transmitting terminal in any sidelink transmission direction; and the transmitting the QoS parameter to the relay terminal and/or the peer node includes: transmitting the QoS parameter used by the sidelink interface in a transmission direction from the relay terminal to the peer node to the relay terminal.

In an embodiment, the transmitting the QoS parameter used by the sidelink interface in the transmission direction from the relay terminal to the peer node to the relay terminal includes: transmitting the QoS parameter used by the sidelink interface in the transmission direction from the relay terminal to the peer node to the relay terminal through the RRC signaling over the sidelink interface between the transmitting terminal and the relay terminal.

In an embodiment, the transmitting the QoS parameter used by the sidelink interface in the transmission direction from the relay terminal to the peer node to the relay terminal through the RRC signaling over the sidelink interface between the transmitting terminal and the relay terminal includes at least one of the following: in case that the QoS parameter is a first sidelink interface QoS parameter associated with a sidelink interface logical channel, carrying the first sidelink interface QoS parameter in configuration information for the sidelink interface logical channel in the transmission direction from the relay terminal to the peer node, and transmitting the first sidelink interface QoS parameter to the relay terminal; and in case that the QoS parameter is a second sidelink interface QoS parameter associated with a remote terminal and/or the relay terminal, adding an IE or a field in the RRC signaling, carrying the second sidelink interface QoS parameter in the IE or the field, and transmitting the second sidelink interface QoS parameter to the relay terminal.

In an embodiment, for a UE-to-UE relay scenario, the QoS management node is any remote terminal performing communication through UE-to-UE relay; and the transmitting the QoS parameter to the relay terminal and/or the peer node includes at least one of the following: transmitting the QoS parameter used by the sidelink interface in a transmission direction from the relay terminal to the peer node to the relay terminal; and transmitting the QoS parameter used by the sidelink interface in a transmission direction from the peer node to the relay terminal to the peer node.

In an embodiment, the transmitting the QoS parameter used by the sidelink interface in the transmission direction from the relay terminal to the peer node to the relay terminal includes: transmitting the QoS parameter used by the sidelink interface in the transmission direction from the relay terminal to the peer node to the relay terminal through RRC signaling over the sidelink interface between the remote terminal and the relay terminal.

In an embodiment, the transmitting the QoS parameter used by the sidelink interface in the transmission direction from the relay terminal to the peer node to the relay terminal through the RRC signaling over the sidelink interface between the remote terminal and the relay terminal includes at least one of the following: in case that the QoS parameter is a first sidelink interface QoS parameter associated with a sidelink interface logical channel, carrying the first sidelink interface QoS parameter in configuration information for the sidelink interface logical channel in the transmission direction from the relay terminal to the peer node, and transmitting the first sidelink interface QoS parameter to the relay terminal; and in case that the QoS parameter is a second sidelink interface QoS parameter associated with a remote terminal and/or the relay terminal, adding an IE or a field in the RRC signaling, carrying the second sidelink interface QoS parameter in the IE or the field, and transmitting the second sidelink interface QoS parameter to the relay terminal.

In an embodiment, the transmitting the QoS parameter used by the sidelink interface in the transmission direction from the peer node to the relay terminal to the peer node includes: transmitting the QoS parameter used by the sidelink interface in the transmission direction from the peer node to the relay terminal to the peer node through end-to-end RRC signaling between the remote terminal and the peer node.

In an embodiment, the transmitting the QoS parameter used by the sidelink interface in the transmission direction from the peer node to the relay terminal to the peer node through the end-to-end RRC signaling between the remote terminal and the peer node includes at least one of the following: in case that the QoS parameter is a first sidelink interface QoS parameter associated with a sidelink interface logical channel, carrying the first sidelink interface QoS parameter in configuration information for the sidelink interface logical channel in the transmission direction from the peer node to the relay terminal and transmitting the first sidelink interface QoS parameter to the peer node; and in case that the QoS parameter is a second sidelink interface QoS parameter associated with a remote terminal and/or the relay terminal, adding an IE or a field in the end-to-end RRC signaling, carrying the second sidelink interface QoS parameter in the IE or the field, and transmitting the second sidelink interface QoS parameter to the peer node.

In an embodiment, the QoS parameter includes any one of the following or a combination thereof: a packet delay budget; a packet error rate; and a PCS link aggregation maximum bit rate.

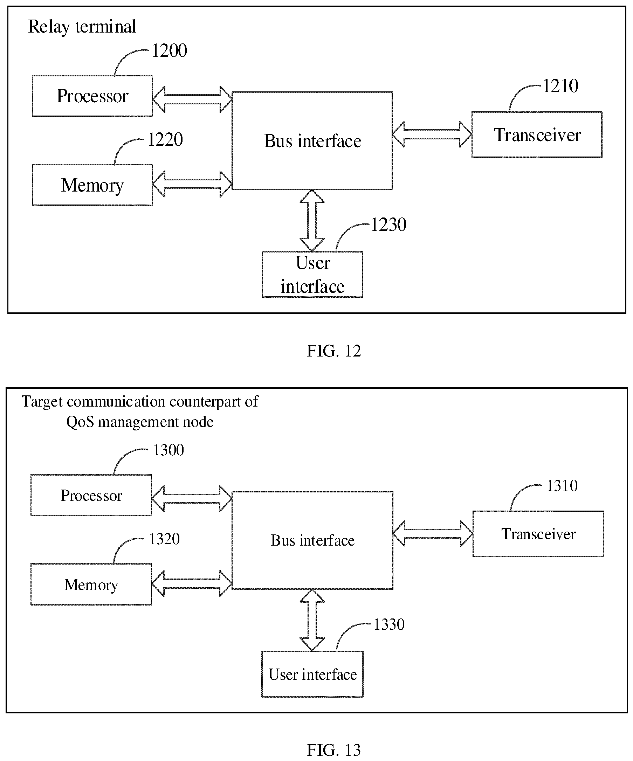

FIG. 12 is a schematic structural diagram of the relay terminal according to an embodiment of the present application. As shown in FIG. 12, the relay terminal includes a memory 1220, a transceiver 1210 and a processor 1200. The processor 1200 and the memory 1220 may also be arranged physically separately.

The memory 1220 is used for storing a computer program; the transceiver 1210 is used for receiving and transmitting data under the control of the processor 1200.

The transceiver 1210 is used for receiving and transmitting data under the control of processor 1200.

In FIG. 12, a bus architecture may include any number of interconnected buses and bridges, and the bus architecture is linked together through one or more processors represented by the processor 1200 and various circuits of memories represented by the memory 1220. The bus architecture may also link various other circuits such as peripheral devices, regulators, and power management circuits together. The bus interface provides an interface. The transceiver 1210 may be multiple elements, including a transmitter and a receiver, providing a unit for communicating with various other apparatuses on a transmission medium, the transmission medium including wireless channels, wired channels, optical cables, and other transmission media. For different user devices, the user interface 1230 may also be an interface that may connect external and internal devices, including but not limited to keyboards, monitors, speakers, microphones, joysticks, etc.

The processor 1200 is used for managing the bus architecture and general processing, and the memory 1220 may store data used by the processor 1200 during operations.

The processor 1200 may be a CPU, ASIC, FPGA, or CPLD, and the processor may also adopt a multi-core architecture.

The processor 1200 is used for executing, based on the obtained executable instructions, any of the methods according to the embodiments of the present application by calling the computer program stored in the memory 1220, for example: receiving a QoS parameter, transmitted from a QoS management node, used by a sidelink interface in a transmission direction from the relay terminal to a peer node of the QoS management node.

In an embodiment, for a user equipment-to-network (U2N) relay scenario, the QoS management node is a network device; and the receiving the QoS parameter, transmitted from the QoS management node, used by the sidelink interface in the transmission direction from the relay terminal to the peer node of the QoS management node includes: receiving the QoS parameter, transmitted from the network device, used by the sidelink interface in the transmission direction from the relay terminal to the peer node through radio resource control (RRC) signaling over a Uu interface between the network device and the relay terminal.

In an embodiment, for a UE-to-UE relay scenario, the QoS management node is a transmitting terminal in any sidelink transmission direction or any remote terminal performing communication through UE-to-UE relay; and the receiving the QoS parameter, transmitted from the QoS management node, used by the sidelink interface in the transmission direction from the relay terminal to the peer node of the QoS management node includes: receiving the QoS parameter, transmitted from the QoS management node, used by the sidelink interface in the transmission direction from the relay terminal to the peer node through RRC signaling over a sidelink interface between the QoS management node and the relay terminal.

In an embodiment, the relay terminal uses a resource allocation mode of terminal autonomous resource selection over the sidelink interface.

FIG. 13 is a schematic diagram of a peer node of the QoS management node according to an embodiment of the present application. As shown in FIG. 13, the peer node of the QoS management node includes a memory 1320, a transceiver 1310 and a processor 1300. The processor 1300 and the memory 1320 may also be arranged physically separately.

The memory 1320 is used for storing a computer program; the transceiver 1310 is used for receiving and transmitting data under the control of the processor 1300.

The transceiver 1310 is used for receiving and transmitting data under the control of processor 1300.

In FIG. 13, a bus architecture may include any number of interconnected buses and bridges, and the bus architecture is linked together through one or more processors represented by the processor 1300 and various circuits of memories represented by the memory 1320. The bus architecture may also link various other circuits such as peripheral devices, regulators, and power management circuits together. The bus interface provides an interface. The transceiver 1310 may be multiple elements, including a transmitter and a receiver, providing a unit for communicating with various other apparatuses on a transmission medium, the transmission medium including wireless channels, wired channels, optical cables, and other transmission media. For different user devices, the user interface 1330 may also be an interface that may connect external and internal devices, including but not limited to keyboards, monitors, speakers, microphones, joysticks, etc.

The processor 1300 is used for managing the bus architecture and general processing, and the memory 1320 may store data used by the processor 1300 during operations.

The processor 1300 may be a CPU, ASIC, FPGA, or CPLD, and the processor may also adopt a multi-core architecture.

The processor 1300 is used for executing, based on the obtained executable instructions, any of the methods according to the embodiments of the present application by calling the computer program stored in the memory 1320, for example: receiving a QoS parameter, transmitted from a QoS management node, used by the sidelink interface in a transmission direction from a peer node to the relay terminal.

In an embodiment, the receiving the QoS parameter, transmitted from the QoS management node, used by the sidelink interface in the transmission direction from the peer node to the relay terminal includes: receiving the QoS parameter, transmitted from the QoS management node, used by the sidelink interface in the transmission direction from the peer node to the relay terminal through end-to-end radio resource control (RRC) signaling between the QoS management node and the peer node.

In an embodiment, the peer node uses a resource allocation mode of terminal autonomous resource selection over the sidelink interface.

It should be noted that the peer node of the QoS management node, the relay terminal, and the QoS management node of the embodiments of the present application may achieve all the method steps implemented in the above method embodiments, and may achieve the same effects. The same parts and beneficial effects as the method embodiments in this embodiment are nor specifically elaborated here.

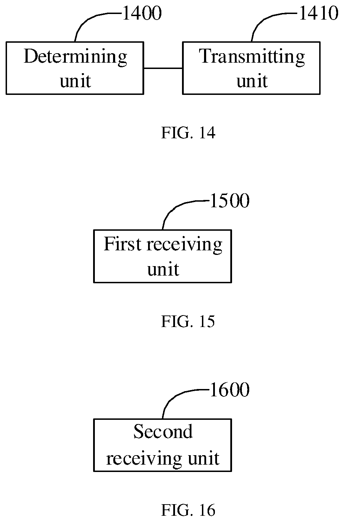

FIG. 14 is a first structural diagram of a QoS parameter configuration apparatus according to an embodiment of the present application, and the apparatus is applied to a QoS management node. As shown in FIG. 14, the apparatus includes:
a determining unit 1400, used for determining a QoS parameter used by a sidelink interface in a target transmission direction between a relay terminal and a peer node of a QoS management node; and
a transmitting unit 1410, used for transmitting the QoS parameter to the relay terminal and/or the peer node.

In an embodiment, for a user equipment-to-network (U2N) relay scenario, the QoS management node is a network device; and the transmitting the QoS parameter to the relay terminal and/or the peer node includes at least one of the following: transmitting the QoS parameter used by the sidelink interface in the downlink transmission direction to the relay terminal; and transmitting the QoS parameter used by the sidelink interface in the uplink transmission direction to the peer node.

In an embodiment, the transmitting the QoS parameter used by the sidelink interface in the downlink transmission direction to the relay terminal includes: transmitting the QoS parameter used by the sidelink interface in the downlink transmission direction to the relay terminal through radio resource control (RRC) signaling over a Uu interface between the network device and the relay terminal.

In an embodiment, the transmitting the QoS parameter used by the sidelink interface in the downlink transmission direction to the relay terminal through the RRC signaling over the Uu interface between the network device and the relay terminal includes at least one of the following: in case that the QoS parameter is a first sidelink interface QoS parameter associated with a sidelink interface logical channel, carrying the first sidelink interface QoS parameter in configuration information for the sidelink interface logical channel in the downlink transmission direction, and transmitting the first sidelink interface QoS parameter to the relay terminal; and in case that the QoS parameter is a second sidelink interface QoS parameter associated with a remote terminal and/or the relay terminal, adding an information element (IE) or a field in the RRC signaling, carrying the second sidelink interface QoS parameter in the IE or the field, and transmitting the second sidelink interface QoS parameter to the relay terminal.

In an embodiment, the transmitting the QoS parameter used by the sidelink interface in the uplink transmission direction to the peer node includes: transmitting the QoS parameter used by the sidelink interface in the uplink transmission direction to the peer node through end-to-end RRC signaling between the network device and the peer node.

In an embodiment, the transmitting the QoS parameter used by the sidelink interface in the uplink transmission direction to the peer node through end-to-end RRC signaling between the network device and the peer node includes at least one of the following: in case that the QoS parameter is a first sidelink interface QoS parameter associated with a sidelink interface logical channel, carrying the first sidelink interface QoS parameter in configuration information for the sidelink interface logical channel in the uplink transmission direction and transmitting the first sidelink interface QoS parameter to the peer node; and in case that the QoS parameter is a second sidelink interface QoS parameter associated with a remote terminal and/or the relay terminal, adding an IE or a field in the end-to-end RRC signaling, carrying the second sidelink interface QoS parameter in the IE or the field, and transmitting the second sidelink interface QoS parameter to the peer node.

In an embodiment, for a UE-to-UE relay scenario, the QoS management node is a transmitting terminal in any sidelink transmission direction; and the transmitting the QoS parameter to the relay terminal and/or the peer node includes: transmitting the QoS parameter used by the sidelink interface in a transmission direction from the relay terminal to the peer node to the relay terminal.

In an embodiment, the transmitting the QoS parameter used by the sidelink interface in the transmission direction from the relay terminal to the peer node to the relay terminal includes: transmitting the QoS parameter used by the sidelink interface in the transmission direction from the relay terminal to the peer node to the relay terminal through the RRC signaling over the sidelink interface between the transmitting terminal and the relay terminal.

In an embodiment, the transmitting the QoS parameter used by the sidelink interface in the transmission direction from the relay terminal to the peer node to the relay terminal through the RRC signaling over the sidelink interface between the transmitting terminal and the relay terminal includes at least one of the following: in case that the QoS parameter is a first sidelink interface QoS parameter associated with a sidelink interface logical channel, carrying the first sidelink interface QoS parameter in configuration information for the sidelink interface logical channel in the transmission direction from the relay terminal to the peer node, and transmitting the first sidelink interface QoS parameter to the relay terminal; and in case that the QoS parameter is a second sidelink interface QoS parameter associated with a remote terminal and/or the relay terminal, adding an IE or a field in the RRC signaling, carrying the second sidelink interface QoS parameter in the IE or the field, and transmitting the second sidelink interface QoS parameter to the relay terminal.

In an embodiment, for a UE-to-UE relay scenario, the QoS management node is any remote terminal performing communication through UE-to-UE relay; and the transmitting the QoS parameter to the relay terminal and/or the peer node includes at least one of the following: transmitting the QoS parameter used by the sidelink interface in a transmission direction from the relay terminal to the peer node to the relay terminal; and transmitting the QoS parameter used by the sidelink interface in a transmission direction from the peer node to the relay terminal to the peer node.

In an embodiment, the transmitting the QoS parameter used by the sidelink interface in the transmission direction from the relay terminal to the peer node to the relay terminal includes: transmitting the QoS parameter used by the sidelink interface in the transmission direction from the relay terminal to the peer node to the relay terminal through RRC signaling over the sidelink interface between the remote terminal and the relay terminal.

In an embodiment, the transmitting the QoS parameter used by the sidelink interface in the transmission direction from the relay terminal to the peer node to the relay terminal through the RRC signaling over the sidelink interface between the remote terminal and the relay terminal includes at least one of the following: in case that the QoS parameter is a first sidelink interface QoS parameter associated with a sidelink interface logical channel, carrying the first sidelink interface QoS parameter in configuration information for the sidelink interface logical channel in the transmission direction from the relay terminal to the peer node, and transmitting the first sidelink interface QoS parameter to the relay terminal; and in case that the QoS parameter is a second sidelink interface QoS parameter associated with a remote terminal and/or the relay terminal, adding an IE or a field in the RRC signaling, carrying the second sidelink interface QoS parameter in the IE or the field, and transmitting the second sidelink interface QoS parameter to the relay terminal.

In an embodiment, the transmitting the QoS parameter used by the sidelink interface in the transmission direction from the peer node to the relay terminal to the peer node includes: transmitting the QoS parameter used by the sidelink interface in the transmission direction from the peer node to the relay terminal to the peer node through end-to-end RRC signaling between the remote terminal and the peer node.

In an embodiment, the transmitting the QoS parameter used by the sidelink interface in the transmission direction from the peer node to the relay terminal to the peer node through the end-to-end RRC signaling between the remote terminal and the peer node includes at least one of the following: in case that the QoS parameter is a first sidelink interface QoS parameter associated with a sidelink interface logical channel, carrying the first sidelink interface QoS parameter in configuration information for the sidelink interface logical channel in the transmission direction from the peer node to the relay terminal and transmitting the first sidelink interface QoS parameter to the peer node; and in case that the QoS parameter is a second sidelink interface QoS parameter associated with a remote terminal and/or the relay terminal, adding an IE or a field in the end-to-end RRC signaling, carrying the second sidelink interface QoS parameter in the IE or the field, and transmitting the second sidelink interface QoS parameter to the peer node.

In an embodiment, the QoS parameter includes any one of the following or a combination thereof: a packet delay budget; a packet error rate; and a PCS link aggregation maximum bit rate.

FIG. 15 is a second structural schematic diagram of a QoS parameter configuration apparatus according to an embodiment of the present application, and the apparatus is applied to a relay terminal. As shown in FIG. 15, the apparatus includes:
a first receiving unit 1500, used for receiving a QoS parameter, transmitted from a QoS management node, used by a sidelink interface in a transmission direction from the relay terminal to a peer node of the QoS management node.

In an embodiment, for a user equipment-to-network (U2N) relay scenario, the QoS management node is a network device; and the receiving the QoS parameter, transmitted from the QoS management node, used by the sidelink interface in the transmission direction from the relay terminal to the peer node of the QoS management node includes: receiving the QoS parameter, transmitted from the network device, used by the sidelink interface in the transmission direction from the relay terminal to the peer node through radio resource control (RRC) signaling over a Uu interface between the network device and the relay terminal.

In an embodiment, for a UE-to-UE relay scenario, the QoS management node is a transmitting terminal in any sidelink transmission direction or any remote terminal performing communication through UE-to-UE relay; and the first receiving unit 1500 is used for receiving the QoS parameter, transmitted from the QoS management node, used by the sidelink interface in the transmission direction from the relay terminal to the peer node through RRC signaling over a sidelink interface between the QoS management node and the relay terminal.

In an embodiment, the relay terminal uses a resource allocation mode of terminal autonomous resource selection over the sidelink interface.

FIG. 16 is a third schematic structural diagram of a QoS parameter configuration apparatus according to an embodiment of the present application, and the apparatus is applied to a peer node of a QoS management node. As shown in FIG. 16, the apparatus includes:
a second receiving unit 1600, used for receiving a QoS parameter, transmitted from the QoS management node, used by a sidelink interface in a transmission direction from the peer node to a relay terminal.

In an embodiment, the receiving the QoS parameter, transmitted from the QoS management node, used by the sidelink interface in the transmission direction from the peer node to the relay terminal includes: receiving a QoS parameter, transmitted from the QoS management node, used by the sidelink interface in the transmission direction from the peer node to the relay terminal through an end-to end radio resource control (RRC) signaling between the QoS management node and the peer node.

In an embodiment, the peer node uses a resource allocation mode of terminal autonomous resource selection over the sidelink interface.

It should be noted that the division of units in the above embodiments of the application is schematic and only serves as a logical functional division. In actual implementation, other divisions may be adopted. In addition, in various embodiments of the present application, each functional unit may be integrated into one processing unit, and each unit may also be provided physically separately, or two or more units may be integrated into one unit. The integrated unit mentioned above may be implemented in a form of hardware and also in a form of software functional unit.

If the integrated unit is implemented in the form of a software functional unit and sold or used as an independent product, the integrated unit may be stored in a processor-readable storage medium. Based on such understanding, the solution disclosed in the present application may essentially or partially contribute to the prior art, or all or part of the solutions may be reflected in a form of software product. The software product is stored in a storage medium, including several instructions to enable a computer device (which may be a personal computer, a server, or a network device, etc.) or processor to execute all or part of the steps of the methods described in various embodiments of the present application. The aforementioned storage media include: USB flash drives, mobile hard drives, read only memory (ROM), random access memory (RAM), magnetic disks or optical discs, and other media that may store program codes.

It should be noted that the above apparatus of the embodiments of the present application may achieve all the method steps implemented in the above method embodiments, and may achieve the same effect. The same parts and beneficial effects as the method embodiments in this embodiment are not further elaborated in detail.

An embodiment of the present application further provides a processor readable storage medium, where the processor readable storage medium stores a computer program for causing the processor to perform the QoS parameter configuration method of the aforementioned embodiments, the method including: determining a QoS parameter used by a sidelink interface in a target transmission direction between a relay terminal and a peer node of a QoS management node; and transmitting the QoS parameter to the relay terminal and/or the peer node.

An embodiment of the present application further provides a processor readable storage medium, where the processor readable storage medium stores a computer program for causing the processor to perform the QoS parameter configuration method of the aforementioned embodiments, the method including: receiving a QoS parameter, transmitted from a QoS management node, used by a sidelink interface in a transmission direction from a relay terminal to a peer node of the QoS management node.

An embodiment of the present application further provides a processor readable storage medium, where the processor readable storage medium stores a computer program for causing the processor to perform the QoS parameter configuration method of the aforementioned embodiments, the method including: receiving a QoS parameter, transmitted from a QoS management node, used by a sidelink interface in a transmission direction from a peer node of the QoS management node to the relay terminal.

The processor-readable storage medium may be any available medium or data storage device that a processor may access, including but not limited to magnetic memory (for example, floppy disks, hard disks, magnetic tapes, magneto-optical disks (MO), etc.), optical memory (for example, CDs, DVDs, BDs, HVDs, etc.), and semiconductor memory (for example, ROM, EPROM, EEPROM, non-volatile memory (NAND FLASH), solid-state drive (SSD), etc.).

The solution provided in the embodiments of the present application may be applicable to various systems, especially 5G systems. For example, the applicable systems may be the global system of mobile communication (GSM) system, code division multiple access (CDMA) system, broadband code division multiple access (WCDMA) general packet radio service (GPRS) system, long term evolution (LTE) system, LTE frequency division duplex (FDD) system, LTE time division duplex (TDD) system, advanced long term evolution advanced (LTE-A) system, universal mobile telecommunications system (UMTS), global interoperability for microwave access (WiMAX) system, 5G new radio (NR) system, etc. These various systems all include terminal devices and network devices. The system may also include a core network component, such as the evolved packet system (EPS), 5G system (5GS), etc.

The terminal devices referred to in the embodiments of the present application may be devices that provide voice and/or data connectivity to users, handheld devices with wireless connection functions, or other processing devices connected to wireless modems. In different systems, names of terminal devices may also vary. For example, in 5G systems, terminal devices may be referred to as user equipments (UEs). Wireless terminal devices may communicate with one or more core networks (CN) through a radio access network (RAN). Wireless terminal devices may be mobile terminal devices, such as mobile phones (or "cellular" phones) and computers with mobile terminal devices, such as portable, pocket, handheld, computer built-in, or car mounted mobile devices. They exchange language and/or data with wireless access networks. For example, personal communication service (PCS) phones, cordless phones, session initiated protocol (SIP) phones, wireless local loop (WLL) stations, personal digital assistants (PDAs), and other devices. Wireless terminal devices may also be referred to as systems, subscriber units, subscriber stations, mobile stations, remote stations, access points, remote terminal devices, access terminal devices, user terminal devices, user agents, user devices, and it is not limited in the embodiments of the present application.

The network device referred to in the embodiments of the present application may be a base station, which may include a plurality of cells providing services for the user equipment. According to different application scenarios, base stations may also be referred to as access points, or they may be devices in the access network that communicate with wireless terminal devices through one or more sectors on the air interface, or they may be refer to other names. Network devices may be used to classify and exchange received air frames and Internet protocol (IP), serve as routers between wireless terminal devices and the rest of the access network, the rest of the access network may include the Internet protocol (IP) communication network. Network devices may also coordinate attribute management of air interfaces. For example, network devices referred to in the embodiments of the present application may be network devices (BTS) in the global system for mobile communications (GSM) or code division multiple access (CDMA), or network devices (NodeB) in broadband code division multiple access (WCDMA), evolutionary network devices (eNB or e-NodeB) in a long term evolution (LTE) system, 5G base stations (gNB) in a 5G network architecture (next generation system), or home evolutionary nodes B (HeNB), relay nodes, femtos, picos, etc., and it is not limited in the embodiments of the present application. In some network structures, network devices may include centralized unit (CU) nodes and distributed unit (DU) nodes, and centralized units and distributed units may also be geographically separated.

Network devices and terminal devices may each use one or more antennas for multi input multi output (MIMO) transmission, MIMO may be single user MIMO (SU MIMO) or multiple user MIMO (MU-MIMO). According to the shape and number of root antenna combinations, MIMO transmission may be 2D-MIMO, 3D-MIMO, FD-MIMO, or Massive MIMO, as well as diversity transmission, precoding transmission, beamforming transmission, etc.

Those skilled in the art should understand that embodiments disclosed herein may be provided as methods, systems, or computer program products. Therefore, the present application may take a form of complete hardware embodiments, complete software embodiments, or embodiments combining software and hardware. Moreover, the present application may take a form of computer program products implemented on one or more computer available storage medium (including but not limited to disk storage, optical storage, etc.) containing computer available program codes.

The present application is described with reference to the flowcharts and/or block diagrams of the methods and devices (systems), and computer program product according to an embodiment of the present application. It should be understood that each process and/or block in the flowchart and/or block diagram, as well as the combination of processes and/or boxes in the flowchart and/or block diagram, may be implemented by computer executable instructions. These computer executable instructions may be provided to processors of general-purpose computers, specialized computers, embedded processors, or other programmable data processing devices to generate a machine, allowing instructions executed by processors of computers or other programmable data processing devices to generate devices for implementing functions specified in one or more steps of a flowchart or one or more blocks in a block diagram.

These processor executable instructions may also be stored in a processor readable memory that may guide computers or other programmable data processing devices to work in a specific way, causing the instructions stored in the processor readable memory to generate manufactures including an instruction device, the instruction device implementing the functions specified in one or more processes and/or blocks of a flowchart.

These processor executable instructions may also be loaded onto a computer or other programmable data processing device to perform a series of operational steps on the computer or other programmable device to generate computer-implemented processing. The instructions executed on the computer or other programmable device provide steps for implementing the functions specified in one or more processes and/or blocks of a flowchart.

Those skilled in the art may make various modifications and variations to the present application without departing from the scope of the present application. In this way, if these modifications and variations of the present application fall within the scope of the claims and their equivalents, the present application also intends to include these modifications and variations

## Claims

1. A quality of service, QoS, parameter configuration method, applied to a QoS management node, comprising:
determining a QoS parameter used by a sidelink interface in a target transmission direction between a relay terminal and a peer node of the QoS management node; and
transmitting the QoS parameter to the relay terminal and/or the peer node.

2. The method of claim 1, wherein for a user equipment-to-network (U2N) relay scenario, the QoS management node is a network device; and
the transmitting the QoS parameter to the relay terminal and/or the peer node comprises at least one of the following:
transmitting the QoS parameter used by the sidelink interface in a downlink transmission direction to the relay terminal; or
transmitting the QoS parameter used by the sidelink interface in an uplink transmission direction to the peer node.

3. The method of claim 2, wherein the transmitting the QoS parameter used by the sidelink interface in the downlink transmission direction to the relay terminal comprises:
transmitting the QoS parameter used by the sidelink interface in the downlink transmission direction to the relay terminal through radio resource control, RRC, signaling over a Uu interface between the network device and the relay terminal.

4. The method of claim 3, wherein the transmitting the QoS parameter used by the sidelink interface in the downlink transmission direction to the relay terminal through the RRC signaling over the Uu interface between the network device and the relay terminal comprises at least one of the following:
in case that the QoS parameter is a first sidelink interface QoS parameter associated with a sidelink interface logical channel, carrying the first sidelink interface QoS parameter in configuration information for the sidelink interface logical channel in the downlink transmission direction, and transmitting the first sidelink interface QoS parameter to the relay terminal; and
in case that the QoS parameter is a second sidelink interface QoS parameter associated with a remote terminal and/or the relay terminal, adding an information element, IE, or a field in the RRC signaling, carrying the second sidelink interface QoS parameter in the IE or the field, and transmitting the second sidelink interface QoS parameter to the relay terminal.

5. The method of claim 2, wherein the transmitting the QoS parameter used by the sidelink interface in the uplink transmission direction to the peer node comprises:
transmitting the QoS parameter used by the sidelink interface in the uplink transmission direction to the peer node through end-to-end RRC signaling between the network device and the peer node.

6. The method of claim 5, wherein the transmitting the QoS parameter used by the sidelink interface in the uplink transmission direction to the peer node through the end-to-end RRC signaling between the network device and the peer node comprises at least one of the following:
in case that the QoS parameter is a first sidelink interface QoS parameter associated with a sidelink interface logical channel, carrying the first sidelink interface QoS parameter in configuration information for the sidelink interface logical channel in the uplink transmission direction and transmitting the first sidelink interface QoS parameter to the peer node; and
in case that the QoS parameter is a second sidelink interface QoS parameter associated with a remote terminal and/or the relay terminal, adding an information element, IE, or a field in the end-to-end RRC signaling, carrying the second sidelink interface QoS parameter in the IE or the field, and transmitting the second sidelink interface QoS parameter to the peer node.

7. The method of claim 1, wherein for a UE-to-UE relay scenario, the QoS management node is a transmitting terminal in any sidelink transmission direction; and
the transmitting the QoS parameter to the relay terminal and/or the peer node comprises:
transmitting the QoS parameter used by the sidelink interface in a transmission direction from the relay terminal to the peer node to the relay terminal.

8. The method of claim 7, wherein the transmitting the QoS parameter used by the sidelink interface in the transmission direction from the relay terminal to the peer node to the relay terminal comprises:
transmitting the QoS parameter used by the sidelink interface in the transmission direction from the relay terminal to the peer node to the relay terminal through the RRC signaling over the sidelink interface between the transmitting terminal and the relay terminal.

9. The method of claim 8, wherein the transmitting the QoS parameter used by the sidelink interface in the transmission direction from the relay terminal to the peer node to the relay terminal through the RRC signaling over the sidelink interface between the transmitting terminal and the relay terminal comprises at least one of the following:
in case that the QoS parameter is a first sidelink interface QoS parameter associated with a sidelink interface logical channel, carrying the first sidelink interface QoS parameter in configuration information for the sidelink interface logical channel in the transmission direction from the relay terminal to the peer node, and transmitting the first sidelink interface QoS parameter to the relay terminal; and
in case that the QoS parameter is a second sidelink interface QoS parameter associated with a remote terminal and/or the relay terminal, adding an information element, IE, or a field in the RRC signaling, carrying the second sidelink interface QoS parameter in the IE or the field, and transmitting the second sidelink interface QoS parameter to the relay terminal.

10. The method of claim 1, wherein for a UE-to-UE relay scenario, the QoS management node is any remote terminal performing communication through UE-to-UE relay; and
the transmitting the QoS parameter to the relay terminal and/or the peer node comprises at least one of the following:
transmitting the QoS parameter used by the sidelink interface in a transmission direction from the relay terminal to the peer node to the relay terminal; and
transmitting the QoS parameter used by the sidelink interface in a transmission direction from the peer node to the relay terminal to the peer node.

11. The method of claim 10, wherein the transmitting the QoS parameter used by the sidelink interface in the transmission direction from the relay terminal to the peer node to the relay terminal comprises:
transmitting the QoS parameter used by the sidelink interface in the transmission direction from the relay terminal to the peer node to the relay terminal through RRC signaling over the sidelink interface between the remote terminal and the relay terminal.

12. The method of claim 11, wherein the transmitting the QoS parameter used by the sidelink interface in the transmission direction from the relay terminal to the peer node to the relay terminal through the RRC signaling over the sidelink interface between the remote terminal and the relay terminal comprises at least one of the following:
in case that the QoS parameter is a first sidelink interface QoS parameter associated with a sidelink interface logical channel, carrying the first sidelink interface QoS parameter in configuration information for the sidelink interface logical channel in the transmission direction from the relay terminal to the peer node, and transmitting the first sidelink interface QoS parameter to the relay terminal; and
in case that the QoS parameter is a second sidelink interface QoS parameter associated with a remote terminal and/or the relay terminal, adding an information element, IE, or a field in the RRC signaling, carrying the second sidelink interface QoS parameter in the IE or the field, and transmitting the second sidelink interface QoS parameter to the relay terminal.

13. The method of claim 10, wherein the transmitting the QoS parameter used by the sidelink interface in the transmission direction from the peer node to the relay terminal to the peer node comprises:
transmitting the QoS parameter used by the sidelink interface in the transmission direction from the peer node to the relay terminal to the peer node through end-to-end RRC signaling between the remote terminal and the peer node.

14. The method of claim 13, wherein the transmitting the QoS parameter used by the sidelink interface in the transmission direction from the peer node to the relay terminal to the peer node through the end-to-end RRC signaling between the remote terminal and the peer node comprises at least one of the following:
in case that the QoS parameter is a first sidelink interface QoS parameter associated with a sidelink interface logical channel, carrying the first sidelink interface QoS parameter in configuration information for the sidelink interface logical channel in the transmission direction from the peer node to the relay terminal and transmitting the first sidelink interface QoS parameter to the peer node; and
in case that the QoS parameter is a second sidelink interface QoS parameter associated with a remote terminal and/or the relay terminal, adding an information element, IE, or a field in the end-to-end RRC signaling, carrying the second sidelink interface QoS parameter in the IE or the field, and transmitting the second sidelink interface QoS parameter to the peer node.

15. The method of any one of claims 1 to 14, wherein the QoS parameter comprises any one of the following or a combination thereof:
a packet delay budget;
a packet error rate; and
a PC5 link aggregation maximum bit rate.

16. A quality of service, QoS, parameter configuration method, applied to a relay terminal, comprising:
receiving a QoS parameter, transmitted from a QoS management node, used by a sidelink interface in a transmission direction from the relay terminal to a peer node of the QoS management node.

17. The method of claim 16, wherein for a user equipment-to-network (U2N) relay scenario, the QoS management node is a network device; and
the receiving the QoS parameter, transmitted from the QoS management node, used by the sidelink interface in the transmission direction from the relay terminal to the peer node of the QoS management node comprises:
receiving the QoS parameter, transmitted from the network device, used by the sidelink interface in the transmission direction from the relay terminal to the peer node through radio resource control, RRC, signaling over a Uu interface between the network device and the relay terminal.

18. The method of claim 16, wherein for a UE-to-UE relay scenario, the QoS management node is a transmitting terminal in any sidelink transmission direction or any remote terminal performing communication through UE-to-UE relay; and
the receiving the QoS parameter, transmitted from the QoS management node, used by the sidelink interface in the transmission direction from the relay terminal to the peer node of the QoS management node comprises:
receiving the QoS parameter, transmitted from the QoS management node, used by the sidelink interface in the transmission direction from the relay terminal to the peer node through RRC signaling over a sidelink interface between the QoS management node and the relay terminal.

19. The method of any one of claims 16 to 18, wherein the relay terminal uses a resource allocation mode of terminal autonomous resource selection over the sidelink interface.

20. A quality of service, QoS, parameter configuration method, applied to a peer node of a QoS management node, comprising:
receiving a QoS parameter, transmitted from the QoS management node, used by a sidelink interface in a transmission direction from the peer node to a relay terminal.

21. The method of claim 20, wherein the receiving the QoS parameter, transmitted from the QoS management node, used by the sidelink interface in the transmission direction from the peer node to the relay terminal comprises:
receiving the QoS parameter, transmitted from the QoS management node, used by the sidelink interface in the transmission direction from the peer node to the relay terminal through end-to-end radio resource control, RRC, signaling between the QoS management node and the peer node.

22. The method of claim 20 or 21, wherein the peer node uses a resource allocation mode of terminal autonomous resource selection over the sidelink interface.

23. A quality of service, QoS, management node, comprising a memory, a transceiver and a processor, wherein
the memory is used for storing a computer program; the transceiver is used for receiving and transmitting data under control of the processor; the processor is used for reading the computer program in the memory and perform the following operations:
determining a QoS parameter used by a sidelink interface in a target transmission direction between a relay terminal and a peer node of the QoS management node; and
transmitting the QoS parameter to the relay terminal and/or the peer node.

24. The QoS management node of claim 23, wherein for a user equipment-to-network (U2N) relay scenario, the QoS management node is a network device; and
the transmitting the QoS parameter to the relay terminal and/or the peer node comprises at least one of the following:
transmitting the QoS parameter used by the sidelink interface in a downlink transmission direction to the relay terminal; and
transmitting the QoS parameter used by the sidelink interface in an uplink transmission direction to the peer node.

25. The QoS management node of claim 24, wherein the transmitting the QoS parameter used by the sidelink interface in the downlink transmission direction to the relay terminal comprises:
transmitting the QoS parameter used by the sidelink interface in the downlink transmission direction to the relay terminal through radio resource control, RRC, signaling over a Uu interface between the network device and the relay terminal.

26. The QoS management node of claim 24, wherein the transmitting the QoS parameter used by the sidelink interface in the uplink transmission direction to the peer node comprises:
transmitting the QoS parameter used by the sidelink interface in the uplink transmission direction to the peer node through end-to-end RRC signaling between the network device and the peer node.

27. The QoS management node of claim 23, wherein for a UE-to-UE relay scenario, the QoS management node is a transmitting terminal in any sidelink transmission direction; and
the transmitting the QoS parameter to the relay terminal and/or the peer node comprises:
transmitting the QoS parameter used by the sidelink interface in a transmission direction from the relay terminal to the peer node to the relay terminal.

28. The QoS management node of claim 27, wherein the transmitting the QoS parameter used by the sidelink interface in the transmission direction from the relay terminal to the peer node to the relay terminal comprises:
transmitting the QoS parameter used by the sidelink interface in the transmission direction from the relay terminal to the peer node to the relay terminal through the RRC signaling over the sidelink interface between the transmitting terminal and the relay terminal.

29. The QoS management node of claim 23, wherein for a UE-to-UE relay scenario, the QoS management node is any remote terminal performing communication through UE-to-UE relay; and
the transmitting the QoS parameter to the relay terminal and/or the peer node comprises at least one of the following:
transmitting the QoS parameter used by the sidelink interface in a transmission direction from the relay terminal to the peer node to the relay terminal; and
transmitting the QoS parameter used by the sidelink interface in a transmission direction from the peer node to the relay terminal to the peer node.

30. The QoS management node of claim 29, wherein the transmitting the QoS parameter used by the sidelink interface in the transmission direction from the relay terminal to the peer node to the relay terminal comprises:
transmitting the QoS parameter used by the sidelink interface in the transmission direction from the relay terminal to the peer node to the relay terminal through RRC signaling over the sidelink interface between the remote terminal and the relay terminal.

31. The QoS management node of claim 29, wherein the transmitting the QoS parameter used by the sidelink interface in the transmission direction from the peer node to the relay terminal to the peer node comprises:
transmitting the QoS parameter used by the sidelink interface in the transmission direction from the peer node to the relay terminal to the peer node through end-to-end RRC signaling between the remote terminal and the peer node.

32. A relay terminal, comprising a memory, a transceiver and a processor, wherein
the memory is used for storing a computer program; the transceiver is used for receiving and transmitting data under control of the processor; the processor is used for reading the computer program in the memory and perform the following operations:
receiving a quality of service, QoS, parameter, transmitted from a QoS management node, used by a sidelink interface in a transmission direction from the relay terminal to a peer node of the QoS management node.

33. A peer node of a quality of service, QoS, management node, comprising a memory, a transceiver and a processor, wherein
the memory is used for storing a computer program; the transceiver is used for receiving and transmitting data under control of the processor; the processor is used for reading the computer program in the memory and perform the following operations:
receiving a QoS parameter, transmitted from the QoS management node, used by a sidelink interface in a transmission direction from the peer node to a relay terminal.

34. A quality of service, QoS, parameter configuration apparatus, applied to a QoS management node, comprising:
a determining unit, used for determining a QoS parameter used by a sidelink interface in a target transmission direction between a relay terminal and a peer node of the QoS management node; and
a transmitting unit, used for transmitting the QoS parameter to the relay terminal and/or the peer node.

35. The apparatus of claim 34, wherein for a user equipment-to-network (U2N) relay scenario, the QoS management node is a network device; and
the transmitting the QoS parameter to the relay terminal and/or the peer node comprises at least one of the following:
transmitting the QoS parameter used by the sidelink interface in a downlink transmission direction to the relay terminal; and
transmitting the QoS parameter used by the sidelink interface in an uplink transmission direction to the peer node.

36. The apparatus of claim 35, wherein the transmitting the QoS parameter used by the sidelink interface in the downlink transmission direction to the relay terminal comprises:
transmitting the QoS parameter used by the sidelink interface in the downlink transmission direction to the relay terminal through radio resource control, RRC, signaling over a Uu interface between the network device and the relay terminal.

37. The apparatus of claim 35, wherein the transmitting the QoS parameter used by the sidelink interface in the uplink transmission direction to the peer node comprises:
transmitting the QoS parameter used by the sidelink interface in the uplink transmission direction to the peer node through end-to-end RRC signaling between the network device and the peer node.

38. The apparatus of claim 34, wherein for a UE-to-UE relay scenario, the QoS management node is a transmitting terminal in any sidelink transmission direction; and
the transmitting the QoS parameter to the relay terminal and/or the peer node comprises:
transmitting the QoS parameter used by the sidelink interface in a transmission direction from the relay terminal to the peer node to the relay terminal.

39. The apparatus of claim 38, wherein the transmitting the QoS parameter used by the sidelink interface in the transmission direction from the relay terminal to the peer node to the relay terminal comprises:
transmitting the QoS parameter used by the sidelink interface in the transmission direction from the relay terminal to the peer node to the relay terminal through the RRC signaling over the sidelink interface between the transmitting terminal and the relay terminal.

40. The apparatus of claim 34, wherein for a UE-to-UE relay scenario, the QoS management node is any remote terminal performing communication through UE-to-UE relay; and
the transmitting the QoS parameter to the relay terminal and/or the peer node comprises at least one of the following:
transmitting the QoS parameter used by the sidelink interface in a transmission direction from the relay terminal to the peer node to the relay terminal; and
transmitting the QoS parameter used by the sidelink interface in a transmission direction from the peer node to the relay terminal to the peer node.

41. The apparatus of claim 40, wherein the transmitting the QoS parameter used by the sidelink interface in the transmission direction from the relay terminal to the peer node to the relay terminal comprises:
transmitting the QoS parameter used by the sidelink interface in the transmission direction from the relay terminal to the peer node to the relay terminal through RRC signaling over the sidelink interface between the remote terminal and the relay terminal.

42. The apparatus of claim 40, wherein the transmitting the QoS parameter used by the sidelink interface in the transmission direction from the peer node to the relay terminal to the peer node comprises:
transmitting the QoS parameter used by the sidelink interface in the transmission direction from the peer node to the relay terminal to the peer node through end-to-end RRC signaling between the remote terminal and the peer node.

43. A quality of service, QoS, parameter configuration apparatus, applied to a relay terminal, comprising:
a first receiving unit, used for receiving a QoS parameter, transmitted from a QoS management node, used by a sidelink interface in a transmission direction from the relay terminal to a peer node of the QoS management node.

44. A quality of service, QoS, parameter configuration apparatus, applied to a peer node of a QoS management node, comprising:
a second receiving unit, used for receiving a QoS parameter, transmitted from the QoS management node, used by a sidelink interface in a transmission direction from the peer node to a relay terminal.

45. A processor readable storage medium, wherein the processor readable storage medium stores a computer program, and the computer program is used for causing a processor to execute the method of any one of the claims 1 to 15, or the method of any one of the claims 16 to 19, or the method of any one of claims 20 to 22.
